(19) Europäisches Patentamt / European Patent Office / Office européen des brevets

(11) **EP 3 422 786 B1**

(12) **EUROPEAN PATENT SPECIFICATION**

(45) Date of publication and mention
of the grant of the patent:
**13.05.2020  Bulletin 2020/20**

(21) Application number: **16891396.0**

(22) Date of filing: **22.02.2016**

(51) Int Cl.:
*H04W 72/08* (2009.01)     *H04W 4/06* (2009.01)
*H04W 16/14* (2009.01)     *H04W 72/04* (2009.01)
*H04W 84/12* (2009.01)

(86) International application number:
**PCT/JP2016/055068**

(87) International publication number:
**WO 2017/145237 (31.08.2017 Gazette 2017/35)**

(54) **WIRELESS COMMUNICATION SYSTEM, CONTROL DEVICE, BASE STATION, AND WIRELESS TERMINAL**

DRAHTLOSKOMMUNIKATIONSSYSTEM, STEUERUNGSVORRICHTUNG, BASISSTATION UND DRAHTLOSES ENDGERÄT

SYSTÈME DE COMMUNICATION SANS FIL, DISPOSITIF DE COMMANDE, STATION DE BASE ET TERMINAL SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.01.2019   Bulletin 2019/01**

(73) Proprietor: **Fujitsu Limited
Kawasaki-shi, Kanagawa 211-8588 (JP)**

(72) Inventors:
• **ODE, Takayoshi
  Kawasaki-shi, Kanagawa 211-8588 (JP)**
• **AKUTAGAWA, Takeshi
  Kawasaki-shi, Kanagawa 211-8588 (JP)**
• **YAMAMOTO, Akihiro
  Kawasaki-shi, Kanagawa 211-8588 (JP)**

(74) Representative: **Haseltine Lake Kempner LLP
Lincoln House, 5th Floor
300 High Holborn
London WC1V 7JH (GB)**

(56) References cited:
**EP-A1- 1 768 292        EP-A1- 2 237 637
EP-A2- 1 058 471        WO-A1-2014/157395
JP-A- 2014 534 731      US-A1- 2015 055 541
US-A1- 2015 103 779     US-A1- 2015 119 023
US-B1- 6 175 737        US-B1- 6 810 252**

• **NOKIA NETWORKS: "On RRM and RSSI
measurements for operation in unlicensed
spectrum", 3GPP TSG- RAN WG1 Meeting #82bis
R1-155604, 25 September 2015 (2015-09-25),
pages 1-3, XP051002468, Retrieved from the
Internet: URL:http:// www.3gpp.org/ftp/tsg _
ran/WGI _ RL1/TSGR1 _ 82b/ Docs/R1-155604.zip
[retrieved on 2016-04-11]**

**Description**

TECHNICAL FIELD

The present invention relates to a wireless communication system, a control device, a base station, and a wireless terminal.

BACKGROUND ART

There are cases in which the same data is transmitted (also referred to as "broadcast" or "multicast") from a plurality of base stations to a wireless terminal. In a case in which a plurality of base stations are managed by the same communication service provider, preferably, a frequency used for broadcast or multicast communication is statically decided in a licensed available frequency band by the communication service provider and is possible not to be changed dynamically.

Patent literature 4 describes a method for reporting and managing wireless resources in TDM.

Patent literature 5 describes a method for uplink multi-cell joint detection in a Time Division-Synchronous Code Division Multiple Access system to realize uplink multi-cell joint detection by a Node B.

CITATION LIST

PATENT LITERATURE

Patent Literature 1: Japanese Laid-open Patent Publication No. 2006-94005
Patent Literature 2: Japanese National Publication of International patent Application No. 2014-500685
Patent Literature 3: Japanese National Publication of International patent Application No. 2009-538025
Patent Literature 4: EP 1768292 A1
Patent Literature 5: EP 2237637 A1

Non Patent Literature

Non-Patent Literature 1: "LTE; Evolved Universal Terrestrial Radio Access (E-UTRA); Physical channels and modulation (3GPP TS 36.211 version 10.7.0 Release 10)," ETSI, (2013-04)
Non-Patent Literature 2: "3rd Generation Partnership Project; Technical Specification Group Radio Access Network; Evolved Universal Terrestrial Radio Access (E-UTRA); Physical Channels and Modulation (3GPP TS 36.211 version 9.1.0 Release 9)," ETSI, (2010-03)

SUMMARY OF THE INVENTION

PROBLEM TO BE SOLVED BY THE INVENTION

However, in a case in which multicast or broadcast communication with a specific wireless terminal are attempted to be performed by a plurality of base stations managed by different communication service providers, the necessity to dynamically change the frequency used for the communication may arise.

In order to dynamically change the using frequency, for example, it is considered to use a frequency requiring no license and can be shared by different communication service providers for multicast or broadcast communication.

However, since there are cases in which there is a temporal restriction to using the frequency requiring no license, it is not necessarily possible to use the frequency for multicast or broadcast communication at any time. For example, a frequency to be used may be occupied by other communication due to a dynamic change.

In one aspect, it is an object of the technology described in this specification to provide a technique capable of dynamically and efficiently deciding frequencies which are usable for transmitting the same data from a plurality of base stations to a wireless terminal.

MEANS TO SOLVE THE PROBLEM

In one aspect, a wireless communication system includes a wireless terminal, a plurality of base stations that communicate with the wireless terminal using at least one of a plurality of frequencies and a control device that controls the plurality of base stations, wherein each of the plurality of base stations includes a transmitter configured to transmit information related to availability for at least one frequency among the plurality of frequencies shared by the plurality of base stations to the control device, and the control device includes a receiver configured to receive the information related the availability and a controller configured to control a frequency used for transmission of the same data by the plurality of base stations.

EFFECTS OF INVENTION

It is possible to dynamically and efficiently decide frequencies which are usable for transmitting the same data from a plurality of base stations to a wireless terminal.

BRIEF DESCRIPTION OF DRAWINGS

Fig. 1 is a block diagram illustrating a configuration example of a wireless communication system of an embodiment.
Fig. 2 is a block diagram illustrating an application example of a multi-cell/multicast coordinate entity (MCE) in a wireless communication system of an embodiment.
Fig. 3 is a diagram schematically illustrating a functional configuration of an MCE in a wireless communication system of an embodiment.
Fig. 4 is a diagram schematically illustrating a functional configuration of a base station that performs MBMS single frequency network (MBSFN) transmission in a wireless communication system of an embodiment.
Fig. 5 is a diagram schematically illustrating a functional configuration of a radio link controller in a wireless communication system of an embodiment.
Fig. 6 is a diagram schematically illustrating a functional configuration of a wireless terminal that receives multimedia broadcast multicast service (MBMS) data in a wireless communication system of an embodiment.
Fig. 7 is a diagram for describing a first example of a frequency selection method in a wireless communication system of an embodiment.
Fig. 8 is a diagram for describing a second example of a frequency selection method in a wireless communication system of an embodiment.
Fig. 9 is a sequence diagram for describing an initial frequency selection operation example in a wireless communication system of an embodiment.
Fig. 10 is a sequence diagram for describing a continuous frequency selection operation example in a wireless communication system of an embodiment.
Fig. 11 is a flowchart for describing a first example of a received power measurement operation in an eNB of an embodiment.
Fig. 12 is a flowchart for describing a second example of a received power measurement operation in an eNB of an embodiment.
Fig. 13 is a diagram illustrating a hardware configuration of a base station that performs MBSFN transmission in a wireless communication system of an embodiment.
Fig. 14 is a diagram illustrating a hardware configuration of a wireless terminal that receives MBMS data in a wireless communication system of an embodiment.
Fig. 15 is a diagram schematically illustrating a functional configuration of a base station that performs MBSFN transmission in a wireless communication system of a first modified example of an embodiment.
Fig. 16 is a diagram illustrating a hardware configuration of a base station that performs MBSFN transmission in a wireless communication system of a first modified example of an embodiment.
Fig. 17 is a diagram for describing a mapping example of a pilot used for MBFSN transmission in a wireless communication system of a second modified example.
Fig. 18 is a diagram for describing a first mapping example of a pilot used for normal data transmission.
Fig. 19 is a diagram for describing a second mapping example of a pilot used for normal data transmission.
Fig. 20 is a sequence diagram for describing a first example of an eNB addition operation in a wireless communication system of a second modified example of an embodiment.
Fig. 21 is a sequence diagram for describing a first example of a frequency selection operation in a wireless communication system of a second modified example of an embodiment.

Fig. 22 is a sequence diagram for describing a second example of a frequency selection operation in a wireless communication system of a second modified example of an embodiment.

Fig. 23 is a sequence diagram for describing a second example of a frequency selection operation in a wireless communication system of a second modified example of an embodiment.

## MODE FOR CARRYING OUT THE INVENTION

The invention made is disclosed in the attached set of independent claims. Further embodiments are disclosed in the attached set of dependent claims.

Hereinafter, exemplary embodiments will be described with reference to the appended drawings. However, the following embodiments are merely examples, and there is no intention to exclude the application of various modified examples or techniques which are not explicitly described in the following embodiments. The present embodiment can be carried out with various modifications without departing from the gist thereof.

Further, the respective drawings are not intended to include only constituent elements illustrated in the drawings, but other functions or the like can be included.

Hereinafter, in the drawings, the same reference numerals denote the same parts.

[A] Example of embodiment

[A-1] System configuration example

As a successor technology to Long Term Evolution (LTE) and LTE-Advanced, technology called fifth generation mobile communication (5G) which is a high-capacity and high-speed wireless network technology is under review. Further, as one of the LTE-Advanced technologies, a service using carrier aggregation (CA) has been introduced, and a communication speed in wireless communication has been improved.

The frequency used for CA is currently carried out with a combination of frequencies allocated to service providers. For example, CA is implemented by combining a plurality of frequencies in a frequency band such as 800 MHz or 1.7 GHz.

Nowadays, radio frequencies are allocated to various wireless communication systems such as mobile communication, emergency communication (i.e. disaster radio), broadcasting, and satellite communication, and frequencies allocated to mobile communication are limited. On the other hand, a communication volume (also referred to as "traffic") of mobile communication has been increasing year by year due to the spread of smartphones or the like, and it is becoming difficult to secure a frequency sufficient to meet the demand.

In this regard, the implementation of CA based on a combination of frequencies which are usable without license such as 5 GHz has been discussed in 3rd Generation Partnership Project (hereinafter also referred to simply as "3GPP") and the like.

(1.1) LAA and WLAN interworking

In 3GPP, licensed assisted access using LTE (LAA) technology and WLAN interworking technology are under review. WLAN interworking is a technique for performing CA or dual connectivity (DC) in Wi-Fi (IEEE 802.11x) and LTE to improve a transmission speed.

LAA is a technology that carries out CA with LTE using frequencies requiring a license and LTE configured using frequencies requiring no license. For example, LTE configured using frequencies requiring no license uses, for example, an industry science medical (ISM) band (2.4 to 2.5 GHz), a 5 GHz band, or the like and is constructed with the assistance of an existing LTE system.

Communication using LAA is specified as specific low power communication in Japan because frequencies requiring no license are used.

The frequencies requiring no license are frequencies which can be freely used, for example, if regulations such as an upper limit of transmission power, an upper limit of a continuous transmission time, and making sure that the frequencies are not being used before transmission are observed.

(1.2) Licensed band and unlicensed band

In current mobile communication, in general, as frequencies used in wireless communication, frequencies to which each country grants a using license to a specific operator on the basis of frequency allocation formulated by ITU-R and circumstances of each country are allocated. "ITU-R" is an abbreviation for International Telecommunication Union Radio communications Sector.

In other words, the operator carries out a mobile communication business using a frequency that demands a license and can be occupied and used (also referred to as a "licensed band").

An unlicensed band is a frequency that can be used without license, unlike the licensed band. For example, an ISM band, a 5 GHz band, and the like are designated as the unlicensed band in each country. The unlicensed band is an example of wireless resources with a time-limited use.

In order to use the unlicensed band, it is specified to carry out a Listen Before Talk (LBT). "LTB" is to confirm that the frequency is not being used before transmission at a certain frequency.

Further, specifications for the unlicensed band are specified by each country. For example, in Japan, in the specification for the unlicensed band, transmission power is equal to or less than a maximum of 23 dBm (that is, 200 mW) per MHz, and a maximum continuous transmission period is 4 msec.

(1.3) MBMS and MBSFN

In the 3G and LTE network systems, specifications of MBMS which is a system that can deliver (that is, "broadcast") various kinds of information such as a video, music, a weather forecast or the like to an unspecified number of users such as television broadcasting have been made.

MBMS is a transmission scheme of delivering (also referred to as "broadcasting") various kinds of information to all terminals within a delivery area at the same time using a common radio channel. In MBMS, various kinds of information or common information are similarly transmitted (also referred to as "multicast") to all terminals of a specific terminal group.

In an LTE service, MBMS is carried out using an MBSFN transmission scheme.

MBSFN is a scheme in which a plurality of base stations constituting MBSFN transmit the same data at the same time in a synchronous manner through the same modulation scheme at the same coding rate using the same frequency, and a terminal side can combine signals transmitted from the base stations. Further, the "base station" may be also referred to as an "eNode B (eNB)."

Further, the specifications of MBSFN are made in wideband code division multiple access (W-CDMA) and LTE. MBSFN is a technique in which MBMS data is transmitted at the same time (that is, "at the same timing") from a plurality of base stations using the same frequency (or wireless resources), the same modulation scheme, and the same coding rate. Further, the wireless resources may be a spreading code in W-CDMA or resource blocks configured with subcarriers in a frequency axis direction and symbols in a time axis direction in LTE.

As a service using MBSFN, for example, there are a case in which one or more live videos (also referred to as "moving images") are delivered in a sports stadium such as a soccer ground or the like and a case in which information such as news, a weather forecast, and tourist information is delivered.

For example, delivering game content in a sports stadium in the Tokyo Olympics to be held in 2020 is under review. Since games such as track and field, gymnastics, and judo are played in parallel at the same time in one sports stadium, delivering a plurality of videos so that viewers can select is considered to be beneficial.

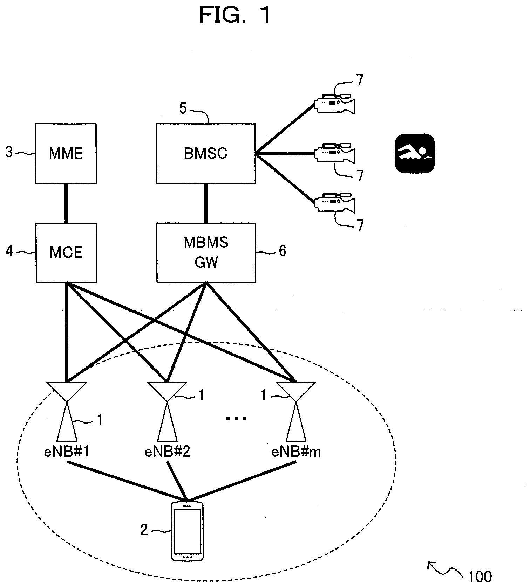

Fig. 1 is a block diagram illustrating a configuration example of a wireless communication system 100 of an embodiment.

The wireless communication system 100 illustrated in Fig. 1 exemplarily includes a plurality of eNB 1 (also referred to as "eNBs #1 to #m") and a wireless terminal 2. The "eNB" is an example of the "base station." In the example illustrated in Fig. 1, m (m is a natural number) eNBs 1 belong to the same core network (not illustrated).

The eNB 1 may transmit data to the wireless terminal 2 in an area indicated by a broken line in Fig. 1. The eNBs #1, #2, and #m may transmit the same data between the respective eNBs 1 using the same frequency, timing, and modulation scheme.

Further, the wireless communication system 100 illustrated in Fig. 1 exemplarily includes an MME 3, an MCE 4, a BMSC 5, an MBMS GW 6, and a content provider 7. "MME" is an abbreviation for mobility management entity, and "BMSC" is an abbreviation for broadcast multicast-service center. "MBMS GW" is an abbreviation for multimedia broadcast multicast service gateway.

The MME 3, the MCE 4, the BMSC 5, the MBMS GW 6, and the content provider 7 will be described below in detail.

(2.1) MCE 4

A frequency (or wireless resources), a modulation scheme, a coding rate, and a transmission timing used for implementing MBSFN may be controlled (that is, "selected") by the MCE 4 which is a higher-level device of the eNB 1. The MCE 4 is an example of a control device and may control an amount of MBMS data to be transmitted. The control functions are also referred to as scheduling.

The frequency, the modulation scheme, the coding rate, the transmission timing, and the like used for implementing MBSFN may be control information (hereinafter also referred to as "MBSFN control information") used for the wireless terminal 2 to receive the MBMS data. The MCE 4 may give a notification of the MBSFN control information to a plurality of eNBs 1 subordinate thereto.

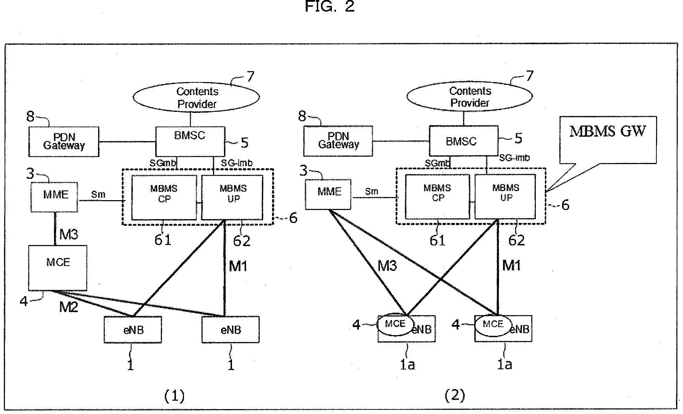

Fig. 2 is a block diagram illustrating an application example of the MCE 4 in the wireless communication system 100 of the embodiment.

The MCE 4 may be installed in the wireless communication system 100 independently of the eNB 1 as illustrated in (1) of Fig. 2 or may be installed as a function of an eNB 1b as illustrated in (2) of Fig. 2. Further, the MCE 4 may be implemented as a function of the MME 3 to be described later.

In the present embodiment, the MCE 4 is described as being installed in the wireless communication system 100 independently of the eNB 1 as illustrated in (1) of Fig. 2. An example in which the MCE 4 is installed as a function of the eNB 1b will be described later in a first modified example of the embodiment.

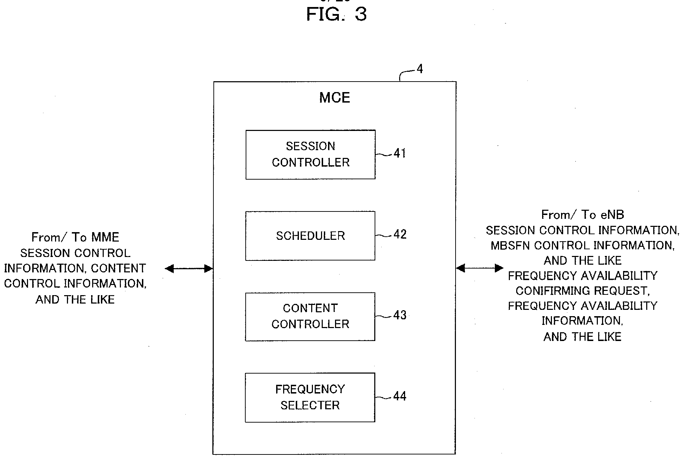

Fig. 3 is a diagram schematically illustrating a functional configuration of the MCE 4 in the wireless communication system 100 of the embodiment.

As illustrated in Fig. 3, the MCE 4 functions as a session controller 41, a scheduler 42, a content controller 43, and a frequency selector 44.

The session controller 41 exemplarily transmits and receives session information for controlling a session of MBMS data transmission between the MME 3 and the eNB 1.

The content controller 43 exemplarily generates a list of content of the MBMS data to be actually transmitted (also referred to as a "content list") and gives a notification of the list to the eNBs 1 subordinate thereto. Further, the content controller 43 may transmit content control information for controlling the content list to the MME 3.

In the W-CDMA and LTE systems, the time axis direction is specified by a slot, a subframe including 2 slots, and a system frame (also referred to as a "radio frame") including 20 slots or 10 subframes. In the LTE system, one slot includes 6 or 7 symbols.

For example, the frequency selector 44 exemplarily selects a frequency to be used for MBFSN transmission from among a plurality of frequencies and gives a notification of the selected frequency to each eNB 1. The frequency selector 44 may transmit a frequency availability confirming request to each eNB 1 in order to search for usable frequencies.

The frequency selector 44 may select the frequency to be used for MBSFN transmission from a plurality of frequencies on the basis of a radio link quality of a plurality of frequencies notified from the respective eNBs 1. Further, the frequency selector 44 may select the frequency used for MBMS transmission from among available frequencies notified from the respective eNBs 1.

In other words, the frequency selector 44 may function as a receiver that receives information related to the availability of at least one frequency among a plurality of frequencies. Further, the frequency selector 44 may function as a controller that controls the frequency used for transmission of the same data by a plurality of eNBs 1 on the basis of the received information. Accordingly, in a case in which the same data is transmitted using frequency shared by a plurality of service providers, it is possible to efficiently decide the frequency to be used.

Further, the frequency selector 44 may function as a controller that transmits control information indicating the frequency used for transmission of the same data to a plurality of eNBs 1. Accordingly, each eNB 1 can reliably perform the MBSFN transmission.

The information related to the availability may indicate whether or not communication using the frequency is possible for each of a plurality of frequencies. In other words, the information related to the availability may indicate whether or not communication using a certain frequency determined by a plurality of eNBs 1 is possible. Accordingly, it is possible to reliably determine the availability of the frequency.

The scheduler 42 exemplarily specifies a transmission timing for transmitting the MBMS data using a number of the system frame, a number of the subframe, and a number of the slot and gives a notification indicating the transmission timing to the eNB 1.

In other words, the scheduler 42 may function as a controller that transmits control information including information related to at least one of a modulation scheme, a coding rate, and a transmission timing used for transmission of the same data by a plurality of eNBs 1 to a plurality of eNB 1. Accordingly, each eNB 1 can reliably perform the MBSFN transmission.

Further, the scheduler 42 may specify a period in which the MBMS data is transmitted (also referred to as a "communication period," a "communication duration time," or a "continuous transmission time") using the subframe or the like, and similarly give a notification indicating the period to the wireless terminal 2.

The MCE 4 may have one or more cells and may specify an area in which the MBSFN transmission is performed as an MBSFN area. The MCE 4 may allocate an MBSFN ID uniquely (that is, "identifiably") to each of the specified MBSFN areas. The MCE 4 may give a notification indicating the allocated MBSFN ID to the eNB 1.

The setting of the MBMS area and the allocation of the MBSFN ID may be statically performed when the service provider installs the MCE 4 and the MME 3, or the allocation may be dynamically performed by the MCE 4 or the MME 3 to be described below.

(2.2) MME 3

The MME 3 is exemplarily installed in the wireless communication system 100 as the higher-level device of the MCE 4. The MME 3 may have a function of controlling a session of the MBMS data transmission, a function of controlling content, and the like.

(2.3) MBMS GW 6

The MBMS GW 6 exemplarily multicasts the MBMS data transmitted from the BMSC 5 to the eNB 1 that performs the MBSFN transmission. In other words, the MBMS GW 6 may simultaneously transmit the same data to a plurality of eNBs 1.
As illustrated in (1) and (2) of Fig. 2, the MBMS GW 6 may include an MBMS control plane (MBMS CP) 61 and an MBMS user plane (MBMS UP) 62.
The MBMS CP 61 exemplarily transmits the control information received from the BMSC 5 to the eNB 1.
The MBMS UP 62 exemplarily transmits user data (that is, "MBMS data") received from the BMSC 5 to the eNB 1.

(2.4) BMSC 5

The BMSC 5 exemplarily manages the delivery of the MBMS data. The BMSC 5 may be connected to the content provider 7 and the PDN gateway (PGW) 8 (not illustrated in Fig. 1) as illustrated in (1) and (2) of Fig. 2.
The BMSC 5 may acquire the MBMS data (that is, "video data") from the content provider 7.
The BMSC 5 may transmit the MBMS data to the core network (not illustrated) to which the wireless communication system 100 illustrated in Fig. 1 belongs or another core network (not illustrated) via the PDN gateway 8.

(2.5) eNB 1

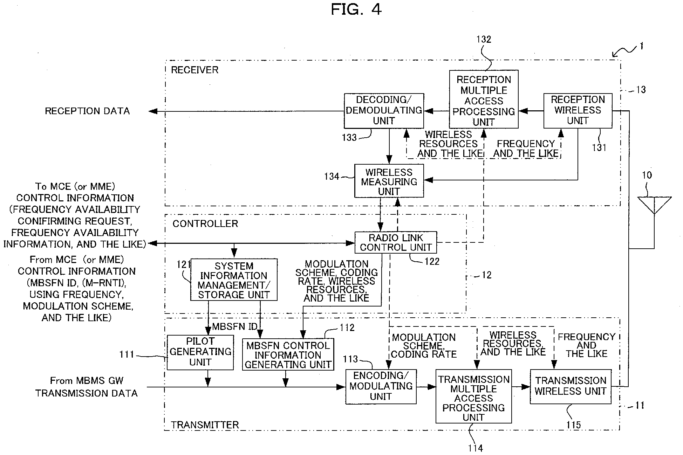

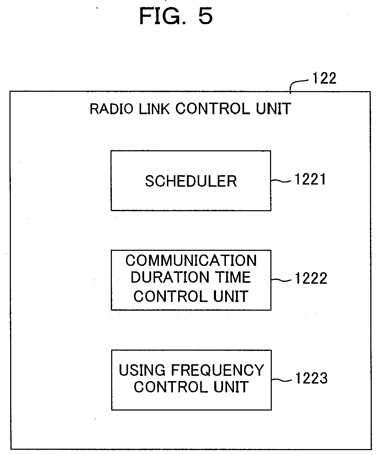

The eNB 1 exemplarily transmits MBSFN control information such as frequency notified from the MCE 4 to the wireless terminal 2 using an MBMS control channel (MCCH).
The eNB 1 may generate the MBSFN control information related to the transmission timing and the transmission period notified from the MCE 4. Then, the eNB 1 may transmit the generated MBMS control information to the wireless terminal 2 using the MBMS control channel (multicast control channel (MCCH)) which is a logical channel.
Further, the eNB 1 may generate the MBMS control information and transmit the generated MBMS control information to the wireless terminal 2 using a shared radio channel (PDSCH).
The eNB 1 may select data to be transmitted from among the MBMS data received from the MBMS GW 6 on the basis of a transmission MBMS data amount notified from the MCE 4. Then, the eNB 1 may transmit the MBMS data to the wireless terminal 2 using a multicast traffic channel (MTCH) which is a logical channel.
The eNB 1 may map the MTCH and the MCCH to a multicast channel (MCH) which is a transport channel and transmit the MBMS data to the wireless terminal 2 using a radio broadcast channel (physical broadcast channel (PBCH)).
In the eNB 1, an encoding/modulating unit 113 (to be described later with reference to Fig. 4) may performs encoding on the MBMS data selected as a transmission target and add a cyclic redundancy check (CRC) digit generated on the basis of the encoded MBMS data. In the eNB 1, the encoding/modulating unit 113 may performs scrambling on the encoded MBMS data with the CRC digit added thereto using a scrambling code generated on the basis of the MBSFN ID or the slot number. Then, in the eNB 1, the encoding/modulating unit 113 may modulate the scrambled data. The generation of the scrambling code and scrambling will be described later.
In the eNB 1, a transmission multiple access processing unit 114 (to be described later with reference to Fig. 4) may convert the modulated MBMS data into a signal complying with multiple access (which may be an "OFDMA signal" or an "OFDM signal" if a communication scheme is LTE). "OFDMA" is an abbreviation for orthogonal frequency-division multiple access. "OFDM" is an abbreviation for orthogonal frequency-division multiplexing.
In the eNB 1, a transmission wireless unit 115 (to be described later with reference to Fig. 4) may perform frequency transform, conversion into a wireless signal, and amplification on a baseband signal, and then transmits the resulting signal to the wireless terminal 2 via an antenna 10 (to be described later with reference to Fig. 4). The eNB 1 may performs a similar process on the MBSFN control signal and the system information and transmit the resulting signal to the wireless terminal 2. The system information may include radio link quality measurement conditions, information related to cell selection, an MBSFN cell ID, an MBSFN ID, and the like.
The eNB 1 may transmit a reference signal (RS) (that is, a "pilot signal") to be described later and a synchronization signal to be described later to the wireless terminal 2. It is possible not to perform encoding, CRC digit addition, and scrambling on the pilot and synchronization signals.
The functions of the eNB 1 will be described later in detail with reference to Fig. 4, Fig. 5, and the like.

(2.6) Wireless terminal 2

The wireless terminal 2 exemplarily may receive the system information transmitted from a plurality of eNBs 1.

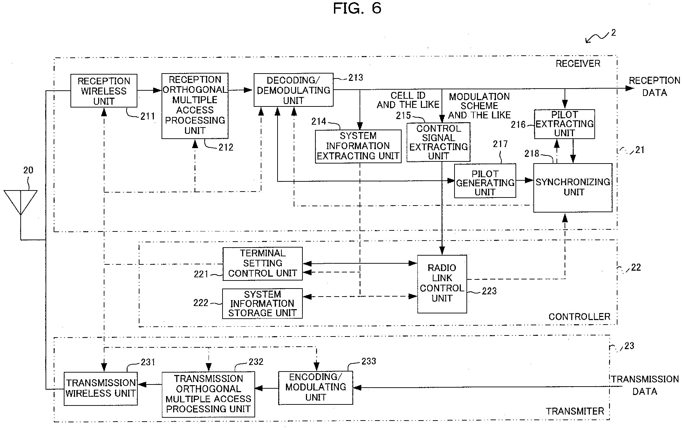

Specifically, in the wireless terminal 2, a reception wireless unit 211 (to be described later with reference to Fig. 6) may perform frequency transform a reception signal received via an antenna 20 and convert it into a baseband signal.

In the wireless terminal 2, a reception orthogonal multiple access processing unit 212 (to be described later with reference to Fig. 6) may separate multiplexed reception for a reception signal converted into the baseband signal.

In the wireless terminal 2, a demodulating/decoding unit 213 (to be described later with reference to Fig. 6) may demodulate a separated reception signal, decode a demodulated reception signal, and reproduce a scrambled reception signal.

In the wireless terminal 2, the demodulating/decoding unit 213 may descramble the scrambled reception signal using the scrambling code generated on the basis of the Cell ID and the slot number.

Further, in the wireless terminal 2, the demodulating/decoding unit 213 may determine whether or not there is an error in the descrambled reception signal on the basis of the CRC, separate the CRC digit, and reproduce the MBMS data.

Similarly, the wireless terminal 2 may receive the pilot signal and the synchronization signals. The wireless terminal 2 may demodulate the reception signal using the pilot signal received at the same time as the reception signal. The wireless terminal 2 may perform synchronization with the eNB 1b on the basis of the received synchronization signal.

Generally, in CA in LTE-Advanced, a PCell and a SCell are cells operated by the same service provider, and the wireless terminal 2 may perform synchronization with the SCell using the frequency requiring no license with the accuracy equal to or less than the accuracy of the PCell. Here, the PCell is an abbreviation for a primary cell and may be a cell in which the MBSFN transmission is not performed. The SCell is an abbreviation for a secondary cell and may be a cell in which the MBSFN transmission is performed. The PCell is also called a first cell or a main cell, and the SCell is also called a second cell or a subordinate cell.

Therefore, when the wireless terminal 2 performs synchronization with the PCell, the wireless terminal 2 is likely to perform synchronization with the SCell. Even when a transmission timing of the PCell coincides with a transmission timing of the SCell, reception timings are likely to be different when there is a difference between a distance from the PCell to the wireless terminal 2 and a distance from the SCell to the wireless terminal 2. In this case, the wireless terminal 2 can receive data from the PCell and the SCell if the difference between the reception timings is about one tenth of the CP.

As described above, the wireless terminal 2 may perform synchronization with the SCell in which the MBSFN transmission is performed, separately from the synchronization with the PCell receiving normal dedicated data. In other words, the wireless terminal 2 may be able to separately perform synchronization for a plurality of frequencies.

The functions of the wireless terminal 2 will be described later in detail with reference to Fig. 6 and the like.

The wireless terminal 2 may include a receiver 21, a controller 22, and a transmitter 23 (to be described later with reference to Fig. 6) which are installed separately for each of the PCell and the SCell.

(2.7) MBMS data transmission

As described above, in LTE, the MBMS data may be encoded, and the scrambling code may be generated using an initial value calculated from the encoded transmission data on the basis of the MBSFN ID. The encoded MBMS data may be scrambled using the calculated scrambling code. Thereafter, the MBMS data may undergo modulation and processes for OFDM (or OFDMA) such as fast Fourier transform (FFT), and the resulting data may be then transmitted to the wireless terminal 2 via the antenna 10 (to be described later using Fig. 4 and the like).

Further, the MBMS data may be mapped to the MCH of the transport channel. Then, the MCH and the MBSFN RS (also referred to as a "MBSFN pilot signal") may be mapped to a physical multicast channel (PMCH) which is a physical channel (also referred to as a "wireless channel") and transmitted.

The MBSFN RS is a reference signal sequence derived by a calculation formula different from a RS normally mapped to a subframe, and an arrangement (that is, "mapping") in a subframe may be different.

Further, in the MBSFN transmission, an MBSFN subframe different from a frame format (also referred to as a "non-MBSFN subframe" or a "normal subframe") used by a shared channel (DSCH) for transmitting normal dedicated data may be used. Here, the "dedicated data" may be referred to as a "terminal dedicated data" or a "user dedicated data." The MBSFN transmission using the MBSFN subframe are described in, for example, Section "6.10.2" of Non-Patent Literature 1 in detail.

(2.8) Scrambling in MBSFN transmission

The calculation formula of the initial value of the scrambling code is specified in Section "6.3.1" of Non-Patent Literature 1, specifically, the following Formula 1. In the following calculation formula, "ns" indicates a slot number.

[Math. 1]

$$N_{ID}^{MBSFN}$$

is the MBSFN ID.
[Math. 2]

$$C_{int} = \lfloor n_s / 2 \rfloor \cdot 2^9 + N_{ID}^{MBSFN} \qquad \text{(Formula 1)}$$

For example, in Section "7.2" of Non-Patent Literature 1, a 31-bit pseudo noise (PN) code used for scrambling is specified. The PN code may be generated by combining two 31-bit gold codes. In Section "7.2" of Non-Patent Literature 1, generator polynomials and initial values of the respective gold codes are also specified as follows.

[Math. 3]

$$c(n) = \left( x_1(n + N_c) + x_2(n + N_c) \right) \bmod 2$$
$$x_1(n + 31) = \left( x_1(n + 3) + x_1(n) \right) \bmod 2$$
$$x_2(n + 31) = \left( x_2(n + 3) + x_2(n + 2) + x_2(n + 1) + x_2(n) \right) \bmod 2$$

[Math. 4]

$$C_{int} = \sum_{i=0}^{30} x_2(i) \cdot 2^i$$

Among the generator polynomials and the initial values which are specified, an initial value of x2 is replaced with, for example, an initial value of Section "6.3.1" of Non-Patent Literature 1, so that the scrambling code is generated. "Nc" in the initial value calculation formula indicates a slot number.

Fig. 4 is a diagram schematically illustrating a functional configuration of the eNB 1 that performs the MBSFN transmission in the wireless communication system 100 of the embodiment.

The eNB 1 exemplarily includes the antenna 10 and functions as a transmitter 11, a controller 12, and a receiver 13.

The receiver 13 exemplarily receives data transmitted from the wireless terminal 2 via the antenna 10 using the frequency requiring no license. The receiver 13 may include a reception wireless unit 131, a reception multiple access processing unit 132, a demodulating/decoding unit 133, and a wireless measuring unit 134.

The reception wireless unit 131 exemplarily receives a signal transmitted from the wireless terminal 2 via the antenna 10 using the frequency requiring no license. Then, the reception wireless unit 131 may amplify the reception signal and further perform conversion from a radio frequency into a baseband signal. Then, the reception wireless unit 131 may input the signal converted into the baseband signal to the reception multiple access processing unit 132 and the wireless measuring unit 134.

Further, the reception wireless unit 131 may receive a signal transmitted from the wireless terminal 2 via the antenna 10 using the frequency requiring a license.

The reception multiple access processing unit 132 exemplarily performs a process of separating the multiplexed reception on the reception signal converted into the baseband signal. Then, the reception multiple access processing unit 132 may input the processed reception signal to the demodulating/decoding unit 133.

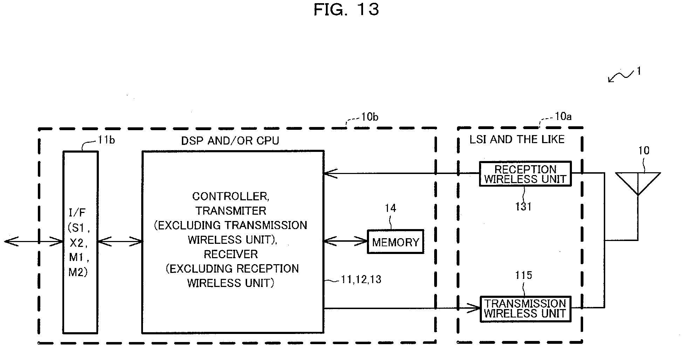

The demodulating/decoding unit 133 exemplarily receives the signal input from the reception multiple access processing unit 132. Then, the demodulating/decoding unit 133 performs a demodulation process on the reception signal. Further, the demodulating/decoding unit 133 may perform decoding on the signal which has undergone the demodulation process. The demodulating/decoding unit 133 may input the signal which has undergone the demodulation/decoding process to the wireless measuring unit 134 and an I/F 11b (to be described later with reference to Fig. 13).

The wireless measuring unit 134 is an example of a measuring unit that measures the wireless quality of each of a plurality of frequencies shared by a plurality of eNBs 1.

The wireless measuring unit 134 exemplarily determines whether or not a frequency requiring no license is being used. In other words, the wireless measuring unit 134 may function as a measuring unit that measures the wireless quality of each frequency. Accordingly, it is possible to search for frequencies available for MBSFN transmission.

Specifically, the wireless measuring unit 134 may measure the radio link quality at a frequency requiring no license on the basis of the inputs from the reception wireless unit 131 and the demodulating/decoding unit 133 and compare the measured radio link quality as a threshold value. The "radio link quality" may be, for example, "received field strength," "pilot received power," or "pilot received quality."

In a case in which the radio link quality is equal to or less than the threshold value, the wireless measuring unit 134 may determine that the certain frequency for which the radio link quality is measured not being used. On the other hand, in a case in which the radio link quality is equal to or larger than the threshold value, the wireless measuring unit 134 may determine that the certain frequency for which the radio link quality is measured is being used.

The wireless measuring unit 134 may compare, for example, a received signal strength indicator (RSSI) corresponding to the received field strength with a threshold value and determine that the certain frequency for which the radio link quality is measured not being used in a case in which the RSSI is equal to or less than the threshold value. In general, since the RSSI is output as a voltage, the wireless measuring unit 134 may compare voltages or compare digital values serving as discrete values obtained by performing digital/analog (D/A) conversion.

Further, the wireless measuring unit 134 may input a determination result obtained by measuring the radio link quality to a radio link controller 122 of the controller 12 to be described later.

In a case in which communicating is performed using the unlicensed band which is the frequency requiring no license band, it is specified to confirm that the frequency to be used before communication is performed is not being used by another communication. The frequency using confirmation is referred to as, for example, listen before talk (LBT) or carrier sense multiple access/collision avoidance (CSMA/CA).

In a case in which the frequency using confirmation is not performed, when it is desired to use a certain radio frequency (that is, "wireless resources"), the wireless resources to be used are not necessarily usable, and thus there is a concern that it is not possible to carry out communication. In this regard, the wireless measuring unit 134 may determine whether or not a certain frequency requiring no license to be used for the MBMS transmission is being used by another communication.

The controller 12 exemplarily includes a system information management/storage unit 121 and the radio link controller 122.

The radio link controller 122 exemplarily performs transmission and reception of control information with the MCE 4.

The control information to be transmitted to the MME 3 is exemplarily a frequency availability confirming request for requesting the MCE 4 to confirm the availability of the frequency requiring no license or frequency availability information indicating the availability of the frequency requiring no license to the MCE 4. Further, the control information received from the MCE 4 exemplarily includes an MBMS radio network temporal ID (M-RNTI) identifying the wireless terminal 2 that receives the MBSFN ID or the MBSFN data to be described later, a using frequency, and a modulation scheme.

The radio link controller 122 may function as a first transmitter that transmits information related to the availability of at least one frequency among a plurality of frequencies shared by a plurality of eNBs 1 to the MCE 4. Accordingly, the MCE 4 can select the frequency to be used for the MBSFN transmission in accordance with the wireless quality of each frequency.

The radio link controller 122 may input information related to the modulation scheme, the coding rate, the wireless resources, the frequency, or the like to the transmitter 11. Further, the radio link controller 122 may input information related to the wireless resources, the frequency, or the like to the receiver 13.

Fig. 5 is a diagram schematically illustrating a functional configuration of the radio link controller 122 in the wireless communication system 100 of the embodiment.

The radio link controller 122 may exemplarily include a scheduler 1221, a communication duration time controller 1222, and a using frequency controller 1223.

The using frequency controller 1223 exemplarily performs the MBSFN transmission to the wireless terminal 2 using the frequency notified from the MCE 4.

The scheduler 1221 exemplarily performs the MBSFN transmission to the wireless terminal 2 on the basis of the transmission timing notified from the MCE 4.

The communication duration time controller 1222 exemplarily performs the MBSFN transmission to the wireless terminal 2 within a communication duration time notified from the MCE 4.

In a case in which the unlicensed band which is the frequency requiring no license band is used, the longest communication duration time (for example, 4 ms in Japan) in which continuous transmission may be specified. In other words, it is specified that, in a case in which the communication duration time reaches a specified longest time, the transmission being performed is stopped, and the frequency being used (that is, "wireless resources") is released.

In this regard, the communication duration time controller 1222 may perform the MBSFN transmission to the wireless terminal 2 within the communication duration time notified from the MCE 4 so that the wireless resources being used are released in a case in which the communication duration time reaches a predetermined time.

The system information management/storage unit 121 exemplarily stores and manages the system information. Further, the system information management/storage unit 121 may store and manage a normal cell ID.

The transmitter 11 may function as a second transmitter that transmits the same data to the wireless terminal 2 using at least one frequency among a plurality of frequencies. Accordingly, the eNB 1 can perform the MBSFN transmission using an appropriate frequency.

The transmitter 11 may include a pilot generating unit 111, an MBSFN control information generating unit 112, an encoding/modulating unit 113, a transmission multiple access processing unit 114, and a transmission wireless unit 115.

The pilot generating unit 111 exemplarily generates a pilot signal on the basis of the MBSFN ID obtained from the system information management/storage unit 121. Then, the pilot generating unit 111 may output the generated pilot signal to the encoding/modulating unit 113.

The MBSFN control information generating unit 112 exemplarily generates the MBSFN control information on the basis of the information related to the wireless scheme, the coding rate, the wireless resources, or the like acquired from the system information management/storage unit 121 and the radio link controller 122.

The encoding/modulating unit 113 exemplarily performs encoding and modulation on the signals input from the pilot generating unit 111 and the MBSFN control information generating unit 112 on the basis of the information related to the modulation scheme and the coding rate acquired from the radio link controller 122. Further, the encoding/modulating unit 113 may map the input signal to the radio frame, the slot, or the subframe. Then, the encoding/modulating unit 113 may input the mapped signal to the transmission multiple access processing unit 114.

For example, the transmission multiple access processing unit 114 exemplarily converts the signal input from the encoding/modulating unit 113 into a signal complying with multiple access (which may be an "OFDMA signal" or an "OFDM signal" if the communication scheme is LTE).

The transmission wireless unit 115 exemplarily converts a frequency of the signal input from the transmission multiple access processing unit 114 into a radio frequency. Further, the transmission wireless unit 115 may amplify the input signal. Thereafter, the transmission wireless unit 115 may transmit the input signal to the wireless terminal 2 via the antenna 10 using the frequency requiring no license.

Further, the transmission wireless unit 115 may transmit the input signal to the wireless terminal 2 via the antenna 10 using the frequency requiring the license.

Fig. 6 is a diagram schematically illustrating a functional configuration of the wireless terminal 2 that receives the MBMS data in the wireless communication system 100 of the embodiment.

The wireless terminal 2 may exemplarily include an antenna 20, a receiver 21, a controller 22, and a transmitter 23.

The transmitter 23 exemplarily transmits the transmission data via the antenna 20, using the frequency requiring no license. The transmitter 23 may include a transmission wireless unit 231, a transmission orthogonal multiple access processing unit 232, and an encoding/modulating unit 233.

The encoding/modulating unit 233 exemplarily receives a transmission data signal input from an external device (not illustrated). The encoding/modulating unit 233 may then encode the received signal. Further, the encoding/modulating unit 233 may modulate the encoded signal. The encoding/modulating unit 233 may perform encoding and modulation in accordance with a method corresponding to a predetermined modulation and coding scheme or a modulation and coding scheme instructed from a terminal setting controller 221 of the controller 22 to be described later. Then, the encoding/modulating unit 233 may input the signal which has undergone the encoding and modulation process to the transmission orthogonal multiple access processing unit 232.

The transmission orthogonal multiple access processing unit 232 exemplarily converts a signal input from the encoding/modulating unit 233 into a signal complying with multiple access (which may be an "OFDMA signal" or an "OFDM signal" if the communication scheme is LTE). Then, the transmission orthogonal multiple access processing unit 232 may input the converted signal to the transmission wireless unit 231.

The transmission wireless unit 231 exemplarily receives an input of the signal converted by the transmission orthogonal multiple access processing unit 232. Further, the transmission wireless unit 231 may receive an indication of a frequency band of a transmission target from the terminal setting controller 221 of the controller 22 described later. Then, the transmission wireless unit 231 may amplify the signal and further perform conversion from the baseband signal into the radio frequency. Then, the transmission wireless unit 231 may transmit the signal converted into the radio frequency to the eNB 1b via the antenna 20. The transmission wireless unit 231 may transmit the signal to the eNB 1 using the frequency requiring no license.

Further, the transmission wireless unit 231 may transmit the signal to the eNB 1 using the frequency requiring the license.

The controller 22 exemplarily includes a terminal setting controller 221, a system information storage unit 222, and a radio link controller 223.

The terminal setting controller 221 exemplarily receives system information input from a system information extracting unit 214 of the receiver 21 to be described later. Then, the terminal setting controller 221 may perform the following control on the basis of the system information.

The terminal setting controller 221 may determine the wireless resources allocated to the wireless terminal 2 on the basis of the control information designated by the radio link controller 223 and determine a modulation and coding scheme being applied. The terminal setting controller 221 may control operations of the reception wireless unit 211, the reception orthogonal multiple access processing unit 212, the demodulating/decoding unit 213, the transmission wireless unit 231, the transmission orthogonal multiple access processing unit 232, and the encoding/modulating unit 233.

Further, the terminal setting controller 221 exemplarily receives a notification indicating the use of the frequency requiring no license from the radio link controller 223. Then, the terminal setting controller 221 may determine that the wireless terminal 2 uses the wireless resources of the frequency requiring no license. The terminal setting controller 221 may give a notification indicating the wireless resources to be used to the reception wireless unit 211, reception orthogonal multiple access processing unit 212, demodulating/decoding unit 213, transmission wireless unit 231, transmission orthogonal multiple access processing unit 232, and encoding/modulating unit 233.

The system information storage unit 222 exemplarily receives the system information input from the system information extracting unit 214. The system information storage unit 222 may store the system information of the eNB 1. Further, the system information storage unit 222 may store the system information of the eNB 1 in accordance with an instruction from the radio link controller 223.

The radio link controller 223 exemplarily receives an input of a cell ID extracted by a control signal extracting unit 215 of the receiver 21 to be described later from the control signal extracting unit 215. Further, the radio link controller 223 may acquire the MBSFN control information extracted by the control signal extracting unit 215. Further, the radio link controller 223 may receive the system information input from the system information extracting unit 214.

The receiver 21 exemplarily receives reception data transmitted from the eNB 1 using the frequency requiring no license through the antenna 20. Further, the receiver 21 may establish synchronization of a data reception process on the basis of the synchronization signal.

The receiver 21 may function as a first receiver that receives the control information indicating the frequency selected on the basis of the wireless quality of each of a plurality of frequencies shared by a plurality of eNBs 1 from at least one of a plurality of eNBs 1. Further, the receiver 21 may function as a second receiver that receives the same data transmitted from a plurality of eNBs 1 to the wireless terminal 2 using the frequency indicated by the received control information. Accordingly, the wireless terminal 2 can receive the MBMS data using the frequency controlled by the MCE 4.

The control information may include information indicating at least one of the demodulation scheme, the coding rate, and the transmission timing used for reception of the same data. Accordingly, the wireless terminal 2 can reliably receive the MBMS data.

The receiver 21 may function as the reception wireless unit 211, the reception orthogonal multiple access processing unit 212, the demodulating/decoding unit 213, the system information extracting unit 214, the control signal extracting unit 215, a pilot extracting unit 216, a pilot generating unit 217, and a synchronizing unit 218.

The reception wireless unit 211 exemplarily receives a signal transmitted from eNB 1 via antenna 20 using the frequency requiring no license. Here, the reception wireless unit 211 may receive an indication of a frequency band of a reception target from the terminal setting controller 221. Then, the reception wireless unit 211 may amplify a reception signal and further perform conversion from the radio frequency into the baseband signal. Further, the reception wireless unit 211 may input the signal converted into the baseband signal to the reception orthogonal multiple access processing unit 212.

Further, the reception wireless unit 211 may receive the signal transmitted from the eNB 1 via the antenna 20 using the frequency requiring the license.

The reception orthogonal multiple access processing unit 212 exemplarily performs a process of separating multiplexed reception on the reception signal converted into the baseband signal. Then, the reception orthogonal multiple access processing unit 212 may input the processed reception signal to the demodulating/decoding unit 213.

The demodulating/decoding unit 213 exemplarily performs a demodulation process on the signal input from the reception orthogonal multiple access processing unit 212. Further, the demodulating/decoding unit 213 may decode the signal which has undergone the demodulation process. The demodulating/decoding unit 213 may perform demodulation and decoding in accordance with a method corresponding to a predetermined modulation and coding scheme or a modulation and coding scheme instructed from the terminal setting controller 221. Then, the demodulating/decoding unit 213 may output the signal which has undergone the demodulation/decoding process.

The system information extracting unit 214 exemplarily extracts the system information transmitted from the eNB 1 from the signal input from the demodulating/decoding unit 213. Then, the system information extracting unit 214 may store the extracted system information in the system information storage unit 222. Further, the system information extracting unit 214 may input the extracted system information to the terminal setting controller 221 and the radio link controller 223. The system information extracted by the system information extracting unit 214 may include network identification information.

The control signal extracting unit 215 exemplarily extracts the MBSFN control information of L (Layer) 1/L2 transmitted from the eNB 1 through a physical downlink control channel (PDCCH) which is a downlink control channel from the signal input from the demodulating/decoding unit 213.

The MBSFN control information may include information related to a cell ID, an MBSFN ID, an MBSFN cell ID, a modulation scheme, and the like.

Then, the control signal extracting unit 215 may input the extracted control information to the radio link controller 223.

The pilot extracting unit 216 exemplarily extracts the pilot signal from the signal input from the demodulating/decoding unit 213 on the basis of a timing of the radio frame or the slot detected by the synchronizing unit 218. Then, the pilot extracting unit 216 may input the extracted pilot signal to the synchronizing unit 218. For example, in the case of the LTE system, the pilot signal is the RS.

The pilot generating unit 217 exemplarily generates synchronization signals of PSS and SSS for each component carrier (CC) from the signal input from the demodulating/decoding unit 213. Then, the pilot generating unit 217 may input the generated synchronization signal to the synchronizing unit 218.

The synchronizing unit 218 exemplarily performs synchronization with the eNB 1 on the basis of the synchronization signal input from the pilot extracting unit 216 and the synchronization signal input from the pilot generating unit 217.

The wireless terminal 2 may communicates with the eNB 1 after confirming that the frequency to be used (also referred to as "wireless resources") is not being used by another communication, similarly to the eNB 1 described above. In other words, the wireless terminal 2 may support LBT (also referred to as "CSMA/CA").

Similarly to the eNB 1 described above, the wireless terminal 2 may release the frequency being used (also referred to as "wireless resources") in a case in which the upper limit of the continuous communication time is reached.

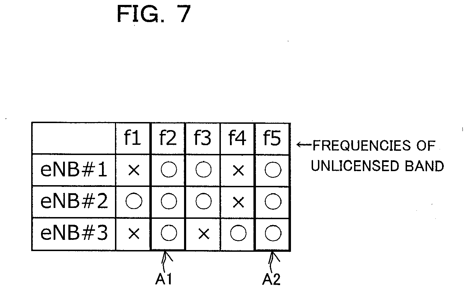

Fig. 7 is a diagram illustrating a first example of a frequency selection method in the wireless communication system 100 of the embodiment.

In the example illustrated in Fig. 7, a case in which that the wireless communication system 100 includes three eNBs #1 to #3, and the wireless measuring unit 134 of each eNB 1 confirms whether or not frequencies f1 to f5 of the unlicensed band are used is assumed. The frequencies f1, f3, and f4 can be used in a wireless area of the eNB #1, the frequencies f1 to f3 and f5 can be used in a wireless area of eNB #2, and the frequencies f2, f4 and f5 can be used in the wireless area of eNB #3.

In the example illustrated in Fig. 7, the frequency selector 44 of the MCE 4 may select the frequencies f2 and f5 that can be used in common by the respective eNBs #1 to #3 as the frequencies used for the MBFSN transmission (see reference numerals A1 and A2).

The number of frequencies used for the MBFSN transmission may be one or more.

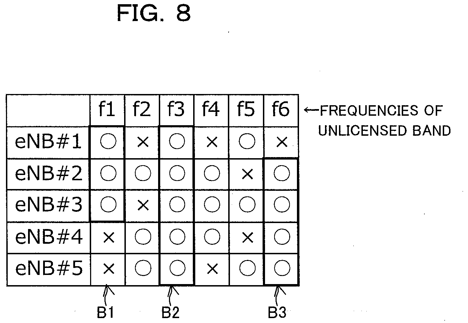

Fig. 8 is a diagram illustrating a second example of the frequency selection method in the wireless communication system 100 of the embodiment.

In the example illustrated in Fig. 8, a case in which the wireless communication system 100 includes five eNBs #1 to #5, and the wireless measuring unit 134 of each eNB 1 confirms whether or not frequencies f1 to f6 of the unlicensed band are used is assumed. The frequencies f1, f3, and f5 can be used in a wireless area of the eNB #1, the frequencies f1 to f4 and f6 can be used in a wireless area of the eNB #2, and the frequencies f1 and f3 to f6 can be used in a wireless area of the eNB #3. The frequencies f2 to f4 and f6 can be used in the wireless area of the eNB #4, and the frequencies f2, f3, f5 and f6 can be used in the wireless area of eNB #5.

In the example illustrated in Fig. 7, the frequency selector 44 of MCE 4 may select the frequencies f1, f3 and f6 as the frequencies used for the MBFSN transmission (see reference numerals B1 to B3). The frequency f1 can be used in common by the eNBs #1 to #3, the frequency f3 can be used in common by the eNBs #1 to #5, and the frequency f6 can be used in common by the eNBs #2 to #5.

The frequency selector 44 of the MCE 4 may cause the eNBs #1 to #3 to perform the MBFSN transmission using the frequency f1 and cause the eNBs #1 to #5 to perform the MBFSN transmission using the frequency f3. Further, the frequency selector 44 may cause the eNBs #2 to #5 to perform MBFSN transmission using the frequency f6.

The frequency selector 44 may cause each eNB 1 to perform the MBFSN transmission using some frequencies, for example, may cause each eNB 1 to perform the MBFSN transmission using the frequencies f3 and f6.

In other words, the frequency selector 44 may select a plurality of eNBs 1 that transmit the same data. Accordingly, in a case in which the same frequency is unable to be used in all the eNBs 1, the MBSFN transmission can be performed using some of the eNBs 1.

[A-2] Operation example

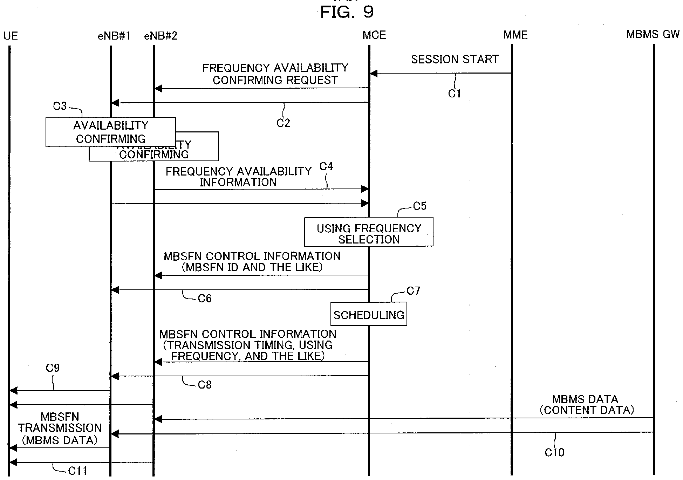

A first example of the frequency initial selection operation in the wireless communication system 100 of the embodiment configured as described above will be described in accordance with a sequence diagram illustrated in Fig. 9 (processes C1 to C11). In the example illustrated in Fig. 9, an example in which the wireless communication system 100 includes two eNBs #1 and #2 will be described.

The MME 3 may issue a session start instruction to the MCE 4 (process C1) .

The MCE 4 may transmit a frequency availability confirming request to the eNBs #1 and #2 (process C2).

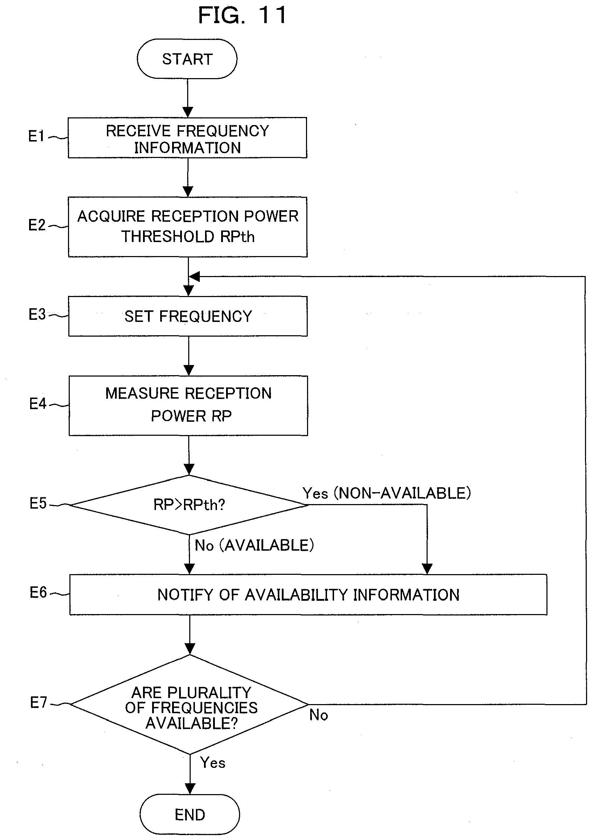

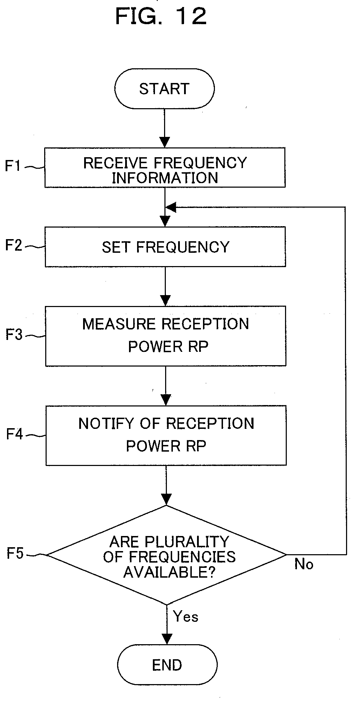

The eNBs #1 and #2 may perform frequency availability confirming of the unlicensed band (process C3). The process C3 will be described later in detail with reference to Figs. 11 and 12.

The eNBs #1 and #2 may transmit frequency availability information on the basis of a result of the frequency availability confirming to the MCE 4 (process C4).

The MCE 4 may select the frequency to be used for the MBSFN transmission on the basis of the received frequency availability information (process C5).

The MCE 4 may transmit the MBSFN control information such as the MBSFN ID to the eNBs 1 #1 and #2 (process C6).

The MCE 4 may perform scheduling of the MBSFN transmission (process C7).

On the basis of a result of the scheduling performed, the MCE 4 may transmit the MBSFN control information (that is, at least one of the "transmission timing," the "using frequency," the "modulation scheme," and the "coding rate") to the eNBs #1 and #2 (process C8).

The eNBs #1 and #2 may transmit the received MBSFN control information to the wireless terminal 2 (process C9).

The MBMS GW 8 may transmit the MBMS data (that is, "content data") to the eNBs #1 and #2 (process C10).

The eNBs #1 and #2 may perform the MBSFN transmission of the received MBMS data to the wireless terminal 2 (process C11). Then, the process may end.

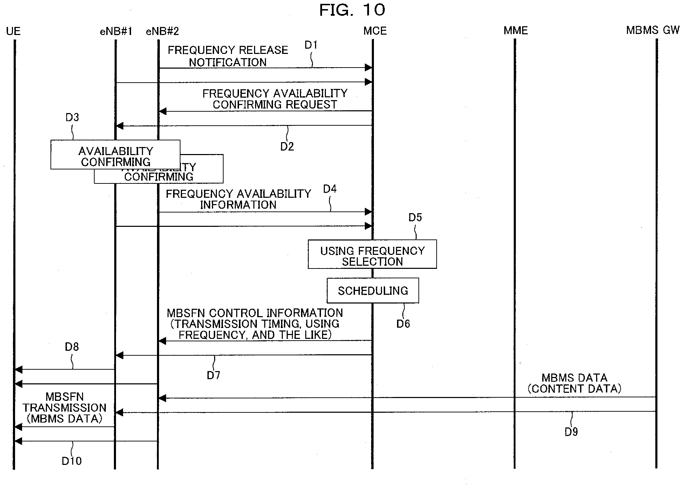

Next, a continuous frequency selection operation example in the wireless communication system 100 of the embodiment will be described in accordance with a sequence diagram illustrated in Fig. 10 (processes D1 to D10). In the example illustrated in Fig. 10, an example in which the wireless communication system 100 includes two eNBs #1 and #2 will be described.

The eNBs 1 #1 and #2 may release the frequency being used in a case in which the communication duration time is elapsed since the MBFSN transmission using a certain unlicensed band frequency is started. Then, the eNBs 1 #1 and #2 may transmit a frequency release notification to the MCE 4 (process D1).

The MCE 4 may transmit the frequency availability confirming request to the eNBs #1 and #2 (process D2).

The eNBs #1 and #2 may perform the frequency availability confirming of the unlicensed band (process D3). The process D3 will be described later in detail with reference to Figs. 11 and 12.

The eNBs #1 and #2 may transmit the frequency availability information on the basis of the result of the frequency availability confirming to the MCE 4 (process D4).

The MCE 4 may select the frequency to be used for the MBSFN transmission on the basis of the received frequency availability information (process D5).

The MCE 4 may perform scheduling of the MBSFN transmission (process D6).

On the basis of the result of the scheduling performed, the MCE 4 may transmit the MBSFN control information (that is, at least one of the "transmission timing," the "using frequency," the "modulation scheme," and the "coding rate") to the eNBs #1 and #2 (process D7).

The eNBs #1 and #2 may transmit the received MBSFN control information to the wireless terminal 2 (process D8).

The MBMS GW 8 may transmit the MBMS data (that is, "content data") to the eNBs #1 and #2 (process D9).

The eNBs #1 and #2 may perform the MBSFN transmission of the received MBMS data to the wireless terminal 2 (process D10). Then, the process may end.

As described above, the frequency selector 44 of the MCE 4 may function as a controller that calculates the elapsed time from the transmission start of the same data by a plurality of eNBs 1 and reselects the frequency to be used for transmission of the same data by a plurality of eNBs 1. Further, the wireless measuring unit 134 of the eNB 1 may function as a controller that calculates the elapsed time from the transmission start of the same data by a plurality of eNBs 1 and re-measures the wireless quality of each frequency. Accordingly, it is possible to prevent a certain frequency from being continuously occupied by the MBSFN transmission.

Next, a first example of an operation of measuring received power RP in the eNB 1 of the embodiment will be described in accordance with a flowchart illustrated in Fig. 11 (process E1 to E7). In the example illustrated in Fig. 11, a measurement operation example in which the eNB 1 determines the availability of the frequency will be described.

The wireless measuring unit 134 may receive information related to the frequency of the unlicensed band (also referred to as "frequency information") from the MCE 4 (process E1).

The wireless measuring unit 134 may acquire a received power threshold value RPth (process E2). The received power threshold value RPRQth may be stored in, for example, the system information management/storage unit 121.

The wireless measuring unit 134 may set the frequency of the unlicensed band at which the receiver 13 performs reception (process E3).

The wireless measuring unit 134 may measure the received power RP of the received signal at the set frequency (process E4).

The wireless measuring unit 134 may determine whether or not the received power RP is greater than the received power threshold value RPth (that is, whether or not "RP > RPth" is satisfied) (process E5).

In a case in which RP > RPth is not satisfied (see a No route of process E5), the wireless measuring unit 134 may transmit the availability information indicating that the measured frequency is available to the MCE 4 via the radio link controller 122 (process E6) .

On the other hand, in a case in which RP > RPth is satisfied (see a Yes route of process E5), the wireless measuring unit 134 may transmit the availability information indicating that the measured frequency is unavailable via the radio link controller 122 (process E6).

Then, the radio link controller 122 may determine whether or not a plurality of frequencies are available (process E7) .

In a case in which a plurality of frequencies are not available (see a No route of process E7), the process returns to process E3.

On the other hand, in a case in which a plurality of frequencies are available (see a Yes route of process E7), the process ends.

The radio link controller 122 may determine the availability of the frequency by determining whether or not a received quality RQ or a channel quality CQ is greater than a threshold value.

Next, a second example of the operation of measuring the received power RP in the eNB 1 of the embodiment will be described in accordance with a flowchart illustrated in Fig. 12 (process F1 to F5) . In the example illustrated in Fig. 12, a measurement operation example in which the MCE 4 determines the availability of the frequency will be described.

The wireless measuring unit 134 may receive information related to the frequency of the unlicensed band (also referred to as "frequency information") from the MCE 4 (process F1).

The wireless measuring unit 134 may set the frequency of the unlicensed band at which the receiver 13 performs reception (process F2).

The wireless measuring unit 134 may measure the received power RP of the received signal at the set frequency (process F3).

The wireless measuring unit 134 may give a notification indicating the measured received power RP to the MCE 4 via the radio link controller 122 (process F4).

Then, the radio link controller 122 may determine whether or not a plurality of frequencies are available (process F5). The radio link controller 122 may recognize whether or not a plurality of frequencies are available through the notification from the MCE 4.

In a case in which a plurality of frequencies are not available (see a No route of process F5), the process returns to process F2.

On the other hand, in a case in which a plurality of frequencies are available (see a Yes route of process F5), the process ends.

The radio link controller 122 may measure the received quality RQ or the channel quality CQ and give a notification indicating the received quality RQ or the channel quality CQ to the MCE 4.

[A-3] Hardware configuration example

Fig. 13 is a diagram illustrating a hardware configuration of the eNB 1 that performs the MBSFN transmission.

The eNB 1 exemplarily includes an large-scale integrated circuit (LSI) 10a and a digital signal processor (DSP) 10b in addition to the antenna 10 described above with reference to Fig. 4. The DSP 10b may be, for example, a central processing unit (CPU) or a combination of a DSP and a CPU. A memory 14 illustrated in Fig. 13 is illustrated as an internal memory of the DSP 10b, but the present embodiment is not limited thereto, and the memory 14 may be installed as an external memory of the DSP 10b independently of the DSP 10b.

The LSI 10a exemplarily functions as the transmission wireless unit 115 and the reception wireless unit 131 described above with reference to Fig. 4.

The DSP 10b is exemplarily a processing device that performs various controls and calculations and implements various functions by executing a program stored in the memory 14. In other words, as illustrated in Fig. 13, the DSP 10b functions as the I/F 11b and may function as the controller 12, the receiver 13, and the transmitter 11 described above with reference to Fig. 4. However, the function of the reception wireless unit 131 among the functions of the receiver 13 is installed in the LSI 10a, and thus it is possible not to install the function of the reception wireless unit 131 in the DSP 10b. Further, the function of the transmission wireless unit 115 among the functions of the transmitter 11 is installed in the LSI 10a, and thus it is possible not to install the function of the transmission wireless unit 115 in the DSP 10b.

A programs for implementing the functions of the I/F 11b, the controller 12, the receiver 13, and the transmitter 11 may be provided in a form in which the program is recorded on a computer-readable recording medium. Examples of the computer-readable recording medium include a flexible disk, a CD, a DVD, a Blu-ray disk, a magnetic disk, an optical disk, and a magneto-optical disk. The CD may be a CD-ROM, a CD-R, a CD-RW or the like, and the DVD may be a DVD-ROM, a DVD-RAM, a DVD-R, a DVD+R, a DVD-RW, a DVD+RW, a HD DVD, or the like.

A computer (the DSP 10b in the present embodiment) may read the program from the recording medium through a reading device (not illustrated) and transfer the program to an internal recording device or an external recording device so that the program is stored therein. Further, the program may be recorded in a storage device (recording medium) such as a magnetic disk, an optical disk, a magneto-optical disk, or the like and provided from the storage device to the computer via a communication path.

In a case in which the functions of the I/F 11b, the controller 12, the receiver 13, and the transmitter 11 are implemented, the program stored in the internal memory device (the memory 14 in the present embodiment) may be executed by the computer (the DSP 10b in the present embodiment) . Further, the computer may read and execute the program recorded in the recording medium.

The I/F 11b is exemplarily an interface device that enables the eNB 1b to communicate with external devices such as the MCE 4 and the MBMS GW 6. As the I/F 11b, for example, various interface cards complying with network standards such as a wired local area network (LAN), a wireless LAN, and a wireless wide area network (WWAN) are used. The I/F 11b may communicate with an external device via various kinds of interfaces such as S1, X2, M1, or M2.

The memory 14 is exemplarily a storage device including a read only memory (ROM) and a random access memory (RAM). A program such as a basic input/output system (BIOS) may be written in the ROM of the memory 14. A software program of the memory 14 may be appropriately read and executed by the DSP 10b. Further, the RAM of the memory 14 may be used as a primary recording memory or a working memory.

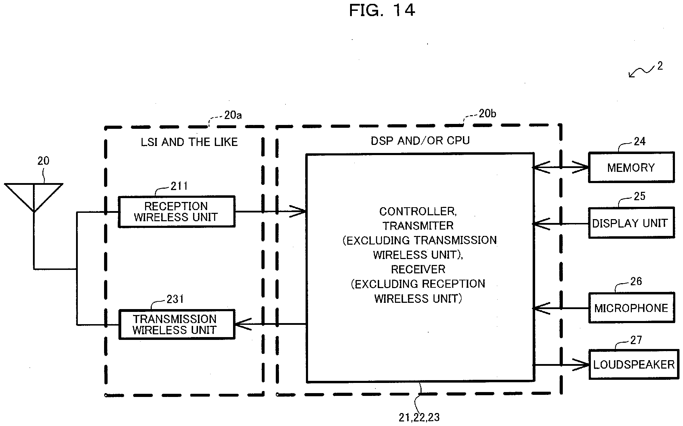

Fig. 14 is a diagram illustrating a hardware configuration of the wireless terminal 2 that receives the MBMS data.

The wireless terminal 2 exemplarily includes an LSI 20a, a DSP 20b, a memory 24, a display unit 25, a microphone 26, and an amplifying unit 27 in addition to the antenna 20 described above with reference to Fig. 6. The DSP 20b may be, for example, a CPU or a combination of a DSP and a CPU.

The LSI 20a exemplarily functions as the transmission wireless unit 231 and the reception wireless unit 211 described above with reference to Fig. 6.

The DSP 20b is exemplarily a processing device that performs various kinds of controls and calculations and implements various functions by executing the program stored in the memory 24. In other words, as illustrated in Fig. 14, the DSP 20b may function as the controller 22, the receiver 21, and the transmitter 23 described above with reference to Fig. 6. Here, the function of the reception wireless unit 211 among the functions of the receiver 21 is installed in the LSI 20a, and thus it is possible not to install the function of the reception wireless unit 211 in the DSP 20b. Further, the function of the transmission wireless unit 231 among the functions of the transmitter 23 is installed in the LSI 20a, and thus it is possible not to install the function of the transmission wireless unit 231 in the DSP 20b.

A programs for implementing the functions of the controller 22, the receiver 21, and the transmitter 23 may be provided in a form in which the program is recorded on a computer-readable recording medium. Examples of the computer-readable recording medium include a flexible disk, a CD, a DVD, a Blu-ray disk, a magnetic disk, an optical disk, and a magneto-optical disk. The CD may be a CD-ROM, a CD-R, a CD-RW or the like, and the DVD may be a DVD-ROM, a DVD-RAM, a DVD-R, a DVD+R, a DVD-RW, a DVD+RW, a HD DVD, or the like.

A computer (the DSP 20b in the present embodiment) may read the program from the recording medium through a reading device (not illustrated) and transfer the program to an internal recording device or an external recording device so that the program is stored therein. Further, the program may be recorded in a storage device (recording medium) such as a magnetic disk, an optical disk, a magneto-optical disk, or the like and provided from the storage device to the computer via a communication path.

In a case in which the functions of the controller 22, the receiver 21, and the transmitter 23 are implemented, the program stored in the internal memory device (the memory 24 in the present embodiment) may be executed by the computer (the DSP 20b in the present embodiment). Further, the computer may read and execute the program recorded in the recording medium.

The memory 24 is exemplarily a storage device including a read only memory (ROM) and a random access memory (RAM). A program such as a basic input/output system (BIOS) may be written in the ROM of the memory 24. a software program of the memory 24 may be appropriately read and executed by the DSP 20b. Further, the RAM of the memory 24 may be used as a primary recording memory or a working memory.

The display unit 25 is exemplarily a liquid crystal display, a cathode ray tube (CRT), an electronic paper display, or the like, and displays various kinds of information for an operator or the like. The display unit 25 may be combined with an input device (not illustrated) and may be, for example, a touch panel.

The microphone 26 exemplarily inputs a voice or the like of the user of the wireless terminal 2 to the DSP 20b.

The amplifying unit 27 exemplarily outputs a voice on the basis of an input from the DSP 20b.

[B] First modified example

In a first modified example, an example in which the MCE 4 is installed in each eNB 1a as illustrated in (2) of Fig. 2 will be described.

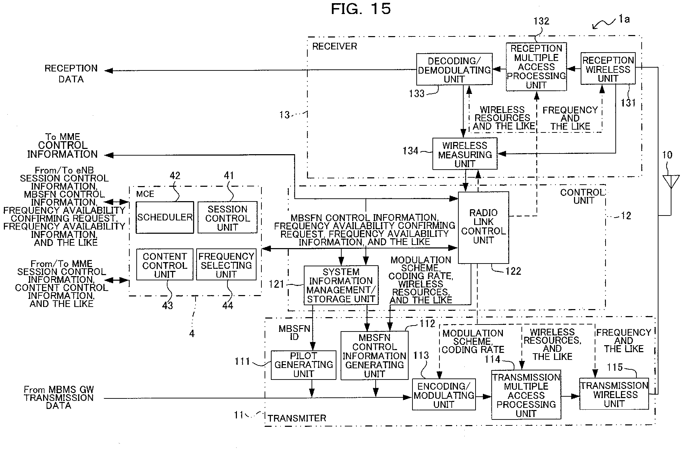

Fig. 15 is a diagram schematically illustrating a functional configuration of a base station 1a that performs the MBSFN transmission in a wireless communication system 100 of a first modified example of the embodiment.

As illustrated in Fig. 15, the base station 1a have the function of the MCE 4 in addition to the functions of the transmitter 11, the controller 12, and the receiver 13 illustrated in Fig. 4.

Similarly to the MCE 4 illustrated in Fig. 3, the MCE 4 may include a session controller 41, a scheduler 42, a content controller 43, and a frequency selector 44.

In a case in which the MCE 4 is incorporated into the MME 3, the control information between the MCE 4 and the eNB 1 may be transmitted through the M 2 interface which is the interface between the eNB 1 and the MCE 4 as illustrated in (1) of Fig. 2.

On the other hand, in a case in which the MCE 4 is incorporated into the eNB 1a, the control information may be transmitted between the MCE 4 and the eNB 1a through the M 2 interface, and the control information may be transmitted between the MCE 4 and the eNB 1a via the same interface in the eNB 1a as well. The interface installed in the eNB 1a is possible not to comply with the specification of the M 2 interface.

In a case in which the MCE 4 is incorporated into the MME 3, all the eNB 1 subordinate to the MCE 4 may be dealt as the same level. On the other hand, in a case in which the MCE 4 is incorporated into the eNB 1a, the eNB 1a having the function of the MCE 4 is dealt as a master, and the eNB 1 not having the function of the MCE 4 may be dealt as a slave. In other words, the eNB 1a having the function of the MCE 4 is dealt as a main base station, and the eNB 1 not having the function of the MCE 4 may be dealt as a subordinate base station. Here, the eNB 1 having the function of the MCE 4 may be dealt as a slave.

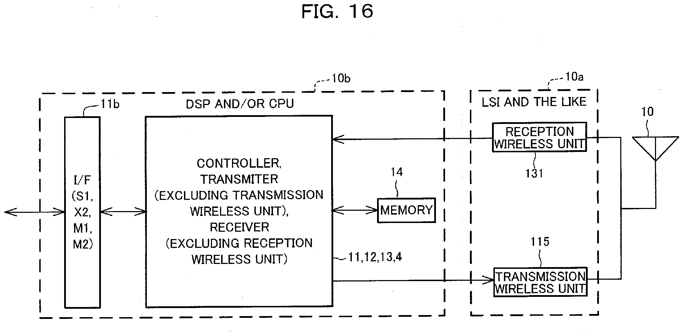

Fig. 16 is a diagram illustrating a hardware configuration of the base station 1a that performs the MBSFN transmission in the wireless communication system 100 of the first modified example of the embodiment.

The DSP 10b of the base station 1a may have the function of the MCE 4 in addition to the functions of the I/F 11b, the controller 12, the receiver 13, the transmitter 11, and the memory 14 illustrated in Fig. 13.

[C] Second modified example

In a second modified example, a control example of adding a new eNB 1 to the wireless communication system 100 will be described. A newly added eNB 1 may identify a signal transmitted from another base station (not illustrated) using a certain frequency of the unlicensed band and determine that the frequency associated with the identified signal is unavailable in a case in which the signal transmitted from another base station is identified.

It is specified that, in a case in which the unlicensed band is used as described above in the example of the embodiment, it is confirmed whether or not the frequency to be used is not being used by a third party before transmission is performed using a certain frequency. The frequency using confirming is also referred to as listen before talk (LBT).

A case in which, when a certain eNB 1 determines whether or not a certain frequency is available, the frequency which is desired to be used is already being used for the MBSFN transmission by at least one other eNB 1, and a certain eNB 1 also desires to perform the MBSFN transmission is assumed.

In a case in which a certain eNB 1 simply measures the radio link quality and determines the availability of the frequency, the frequency for which the radio link quality is measured is likely to be determined to be unavailable due to the influence of the MBSFN transmission being performed by another eNB 1.

In this regard, the eNB 1 exemplarily measures the radio link quality by excluding the received power measured by the MBSFN transmission and determines whether or not the frequency for which the radio link quality is measured is available.

The eNB 1 may use a method of generating an MBSFN pilot signal to be described below. As will be described later using Formula 2, the MBSFN ID may be used as the initial value when a pilot sequence for MBSFN transmission is generated. The eNB 1 may distinguish a pilot signal sequence transmitted by MBSFN from the other pilot signal sequences by recognizing the MBSFN ID.

Here, an example in which, in a case in which the eNBs 1 #1 to #3 subordinate to the MCE 4 are performing the MBSFN transmission using the frequency f1 (that is, the "frequency band"), the eNB #4 also performs the MBSFN transmission using the frequency f1 newly will be described.

The eNB #4 subordinate to the MCE 4 or the MCE 4 may attempt to perform the MBSFN transmission using the frequency f1. The MCE 4 may request the eNB #4 to perform the MBSFN transmission. Further,' the eNB #4 may request the MCE 4 to perform the MBSFN transmission. The execution request for the MBSFN transmission may be caused by a request from the wireless terminal 2.

The MCE 4 may give a notification indicating the MBSFN ID which is an identifier identifying the MBSFN transmission using the frequency f1 to the eNB #4 and request the eNB #4 to measure the radio link quality for determining whether or not the frequency f1 in which the MBSFN transmission is performed is available.

If the measurement of the radio link quality is requested, the wireless measuring unit 134 of the eNB #4 (see Fig. 4) may calculate the pilot signal sequence transmitted through the MBSFN transmission on the basis of the notified MBSFN ID. Further, the wireless measuring unit 134 may measure the radio link quality at the frequency f1 and determine that the frequency f1 is available in a case in which the measured radio link quality is equal to or less than a threshold value. Here, the radio link quality may be, for example, a signal to interference ratio (SIR).

In the SIR, desired signal power may be received power of the pilot signal sequence calculated on the basis of the notified MBSFN ID, and the interference signal power may be received power of another pilot signal string.

In a case in which the received power of another pilot signal sequence is smaller than the threshold value, the wireless measuring unit 134 may determine that the frequency f1 in which the radio link quality is measured is not being used by devices other than the eNBs 1 #1 to #3 and the wireless terminal 2 which are performing the MBSFN transmission. In other words, the wireless measuring unit 134 may determine that the frequency f1 is available for the MBSFN transmission. Then, the wireless measuring unit 134 may give a notification indicating the determination result to the MCE 4.

In the above example, the eNB #4 determines whether or not the frequency f1 is available and give a notification to the MCE 4, but the present embodiment is not limited thereto. The eNB #4 may give a notification indicating the measurement result of the radio link quality to the MCE 4, and the MCE 4 may determine the availability of the frequency f1.

The method of calculating the pilot signal sequence on the basis of the MBSFN ID is described in Sections "6.10.2.1" and "7.2" of Non-Patent Literature 2. The eNB 1 or the wireless terminal 2 can generate the pilot for the MBSFN transmission being performed on the basis of the MBSFN ID serving as the notified system information. Further, the eNB 1 or the wireless terminal 2 can identify the interference wave (or the interference signal) and an expectancy wave (or an expectancy signal) using the generated pilot for the MBSFN transmission. Further, the eNB 1 or the wireless terminal 2 can easily measure the quality of radio link by recognizing another signal as the interference signal without recognizing the pilot signal for the MBSFN transmission as the interference signal.

The radio link quality is not limited to the SIR. The eNB 1 may measure the radio link quality using the received power of the pilot other than a demanded pilot as the interference power. Further, the eNB 1 may measure the received power excluding the demanded pilot received power as the radio link quality.

The pilot mapped to the MBSFN subframe is also referred to as an MBSFN RS. The MBSFN RS may be a reference signal sequence derived by a calculation formula different from the RS mapped to a normal subframe, and an arrangement (in other words, "mapping") in the subframe may be different.

In the calculation of the MBSFN RS, an MBSFN ID that is an ID identifying the MBSFN area may be used in the following initial value calculation formula (Formula 2). In other words, Formula 2 may be used to calculate the MBSFN RS to be transmitted together when the eNB 1 performs the MBSFN transmission.

Further, when synchronization using the MBSFN RS or generation of the radio link quality is performed in the wireless terminal 2, the pilot (that is, the "pilot signal sequence") using the MBSFN may be calculated in accordance with Formula 2.

In Formula 2, "ns" exemplarily indicates a slot number.

[Math. 5]

$$C_{int} = 2^9 \cdot (7 \cdot (n_s + 1) + l + 1) \cdot \left(2 \cdot N_{ID}^{MBSFN} + 1\right) + N_{ID}^{MBSFN}$$

(Formula 2)

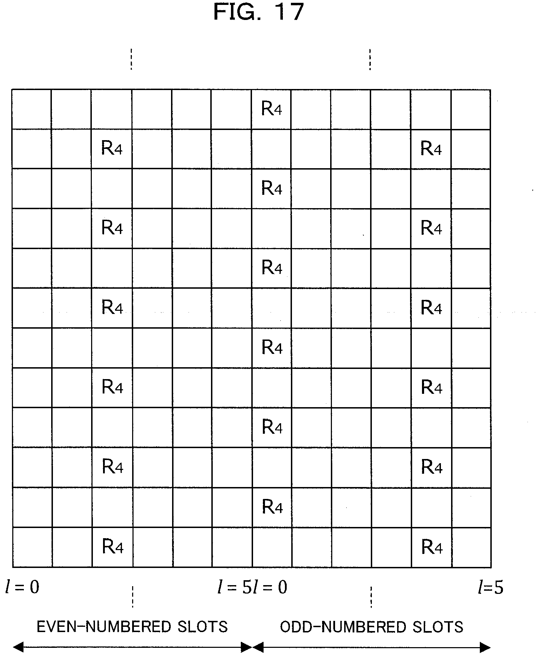

Fig. 17 is a diagram for describing a mapping example of the pilot used for the MBFSN transmission in the wireless communication system 100 of the second modified example.

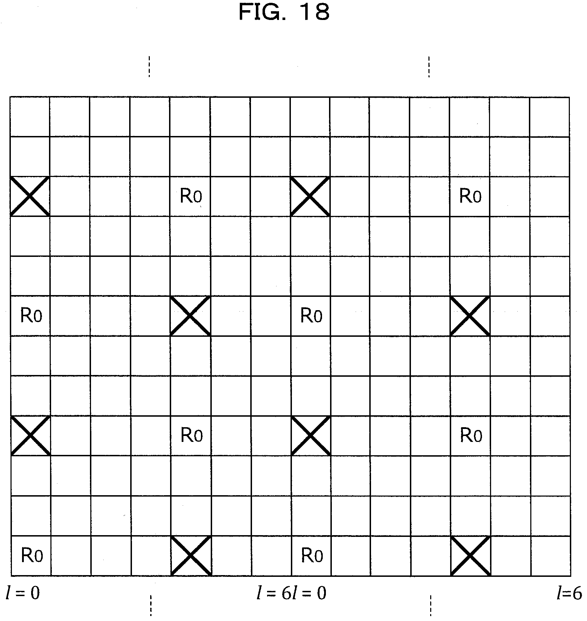

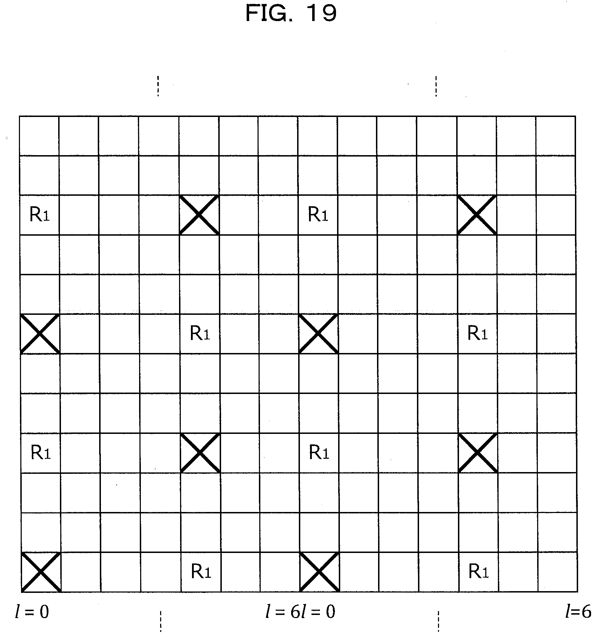

Fig. 18 is a diagram for describing a first mapping example of the pilot used for normal data transmission. Fig. 19 is a diagram for describing a second mapping example of the pilot used for normal data transmission.

Figs. 18 and 19 illustrate mapping of an RS of a normal subframe in a case in which a first antenna and a second antenna are installed in the base station. Fig. 18 illustrates mapping of an RS of a normal subframe received by the first antenna, and Fig. 19 illustrates mapping of an RS of a normal subframe received by the second antenna.

The "RS of the normal subframe" is also referred to as a "cell specific RS (CRS)" or a "common RS." It is also referred to as a cell-specific pilot or a terminal-common pilot.

Each of cells illustrated in Figs. 17 to 19 may indicate a resource element. "R4," "R0," and "R1" illustrated in Figs. 17 to 19 may respectively indicate RSs in the antenna ports. Further, "X" illustrated in Figs. 18 and 19 may indicate an element not used for transmission in each antenna port.

If Fig. 17 is compared with Fig. 18 and Fig. 19, a pilot arrangement is different between the MBSFN RS and the RS of the normal subframe.

A cyclic prefix (CP) used in the MBSFN subframe is also different between the MBSFN RS and the RS of the normal subframe. The "CP" is also referred to as a "guard interval (GI)" or a "redundant part." In the normal subframe, the CP may be the normal CP. On the other hand, the CP used in the MBSFN subframe may be a CP of increasing a combinable temporal range (that is, a "range in a time axis direction") in order to combine and receive transmission waves transmitted from as many eNBs 1 as possible. Thus, the CP used in the MBSFN subframe may be an extended CP which is longer in the time axis direction (or extended in the time axis direction) than the normal CP.

The number of symbols per slot in the MBSFN subframe is usually 1 slot smaller than the number of symbols per slot in the normal subframe. The normal subframe (that is, the "non-MBSFN subframe") has 7 symbols per slot, whereas the MBSFN subframe has 6 symbols per slot. In Fig. 17 to Fig. 19, each subframe has 2 slots.

The data transmission may be performed in units of subframes illustrated in Figs. 17 to 19. In a case in which one subframe is 1 msec, the data transmission may be controlled using 1 msec as a minimum unit such that data is transmitted.

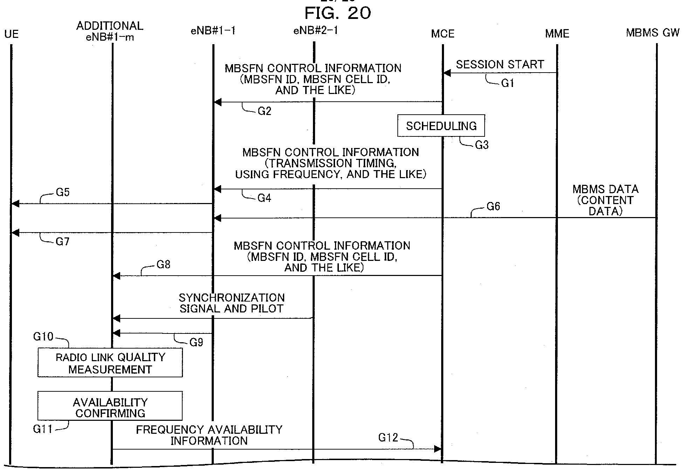

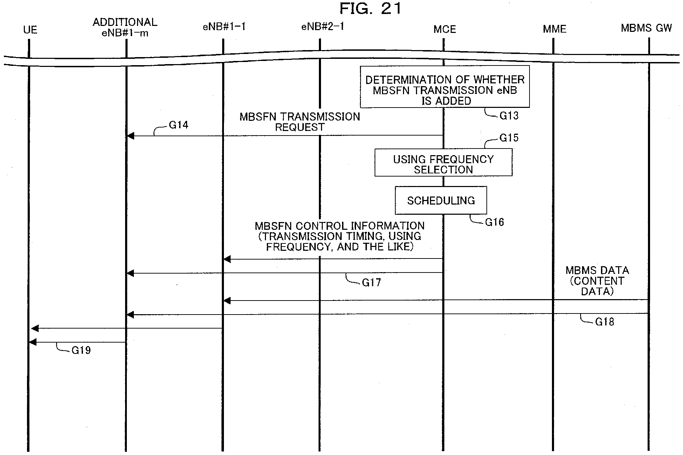

A first example of an operation of adding the eNB 1 in the wireless communication system 100 of the second modified example configured as described above will be described in accordance with a sequence diagrams illustrated in Figs. 20 and 21 (processes G1 to G19). In the example illustrated in Figs. 20 and 21, a measurement operation example in which the eNB 1 determines the availability of the frequency will be described.

Fig. 20 illustrates a process of processes G1 to G12, and Fig. 21 illustrates a process of processes G13 to G19.

In Figs. 20 and 21, an eNB #1-1 that performs the MBSFN transmission and an eNB #2-1 that does not perform the MBSFN transmission are installed in the wireless communication system 100, and an eNB #1-m that performs the MBSFN transmission is newly added.

The MME 3 may issue a session start instruction to the MCE 4 (process G1 in Fig. 20).

The MCE 4 may transmit the MBSFN control information such as the MBSFN ID and the MBSFN cell ID to the eNB 1 #1-1 (process G2 in Fig. 20).

The MCE 4 may perform scheduling of the MBSFN transmission (process G3 in Fig. 20).

On the basis of the result of the scheduling performed, the MCE 4 may transmit the MBSFN control information (that is, at least one of the "transmission timing," the "using frequency," the "modulation scheme," and the "coding rate") to the eNB #1-1 (process G4 in Fig. 20).

The eNB #1-1 may transmit the received MBSFN control information to the wireless terminal 2 (process G5 in Fig. 20).

The MBMS GW 8 may transmit the MBMS data (that is, the "content data") to the eNB #1-1 (process G6 in Fig. 20).

The eNB #1-1 may transmit the received MBMS data to the wireless terminal 2 through the MBSFN transmission (process G7 in Fig. 20).

The MCE 4 may transmit the MBSFN control information such as the MBSFN ID and the MBSFN cell ID to the newly added eNB #1-m (process G8 in Fig. 20).

The eNB #1-1 and the eNB #2-1 may transmit the synchronization signal and the pilot to the newly added eNB #1-m (process G9 in Fig. 20).

The eNB #1-m may measure the radio link quality of the frequency of the unlicensed band (process G10 in Fig. 20).

The eNB #1-m may perform the availability confirming of the frequency in which the measurement of the radio link quality is performed (process G11 in Fig. 20).

The eNB #1-m may transmit the frequency availability information on the basis of the frequency availability confirming result to the MCE 4 (process G12 in Fig. 20).

On the basis of the received frequency availability information, the MCE 4 may determine whether or not the eNB #1-m performing the MBSFN transmission is added (process G13 in Fig. 21) .

The MCE 4 may transmit the MBSFN transmission request to eNB #1-m (process G14 in Fig. 21).

The MCE 4 may select the frequency to be used for the MBSFN transmission on the basis of the received frequency availability information (process G15 in Fig. 21).

The MCE 4 may perform scheduling of the MBSFN transmission (process G16 in Fig. 21).

On the basis of the result of the scheduling performed, the MCE 4 may transmit the MBSFN control information (that is, at least one of the "transmission timing," the "using frequency," the "modulation scheme," and the "coding rate") to the eNBs #1-1 and #1-m (process G17 in Fig. 21).

The MBMS GW 8 may transmit the MBMS data (that is, the "content data") to the eNBs #1-1 and #1-m (process G18 in Fig. 21).

The eNBs #1-1 and 1-m may perform the MBSFN transmission of the received MBMS data to the wireless terminal 2 (process G19 in Fig. 21). Then, the process may end.

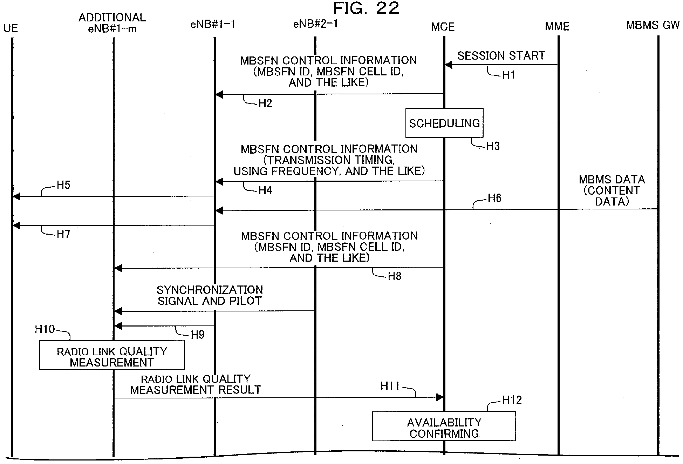

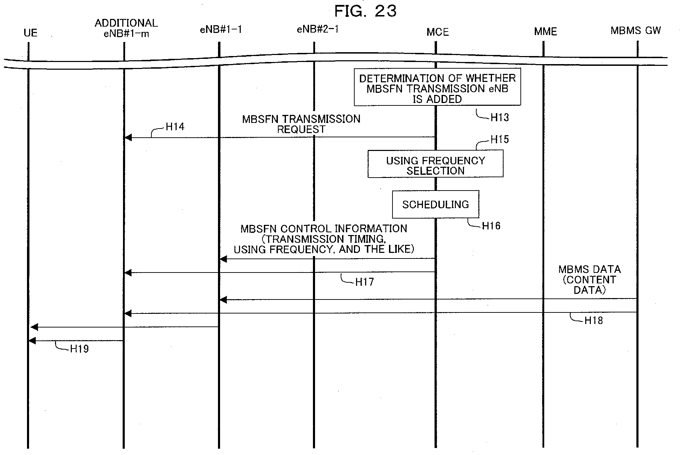

Next, a second example of the operation of adding the eNB 1 in the wireless communication system 100 of the second modified example will be described in accordance with a sequence diagrams illustrated in Figs. 22 and 23 (processes H1 to H19).In the example illustrated in Figs. 22 and 23, a measurement operation example in which the MCE 4 determines the availability of the frequency will be described.

Fig. 22 illustrates a process of processes H1 to H12, and Fig. 22 illustrates a process of processes H13 to H19.

In Figs. 22 and 23, an eNB #1-1 that performs the MBSFN transmission, and an eNB #2-1 that does not perform the MBSFN transmission are installed in the wireless communication system 100, and an eNB #1-m that performs the MBSFN transmission m is newly added.

The MME 3 may issue a session start instruction to the MCE 4 (process H1 in Fig. 22).

The MCE 4 may transmit the MBSFN control information such as the MBSFN ID and the MBSFN cell ID to the eNB 1 #1-1 (process H2 in Fig. 22).

The MCE 4 may perform scheduling of the MBSFN transmission (process H3 in Fig. 22).

On the basis of the result of the scheduling performed, the MCE 4 may transmit the MBSFN control information (that is, at least one of the "transmission timing," the "using frequency," the "modulation scheme," and the "coding rate") to the eNB #1-1 (process H4 in Fig. 22).

The eNB #1-1 may transmit the received MBSFN control information to the wireless terminal 2 (process H5 in Fig. 22).

The MBMS GW 8 may transmit the MBMS data (that is, the "content data") to the eNB #1-1 (process H6 in Fig. 22).

The eNB #1-1 may perform the MBSFN transmission of the received MBMS data to the wireless terminal 2 (process H7 in Fig. 22) .

The MCE 4 may transmit the MBSFN control information such as the MBSFN ID and the MBSFN cell ID to the newly added eNB #1-m (process H8 in Fig. 22).

The eNB #1-1 and eNB #2-1 may transmit the synchronization signal and the pilot to the newly added eNB #1-m (process H9 in Fig. 22).

The eNB #1-m may measure the radio link quality of the frequency of the unlicensed band (process H10 in Fig. 22).

The eNB #1-m may transmit the measurement result of the radio link quality on the basis of the measurement result of the radio link quality to the MCE 4 (process H11 in Fig. 22).

The MCE 4 may perform the frequency availability confirming on the basis of the measurement result of the received radio link quality (process H12 in Fig. 22).

On the basis of the result of the frequency availability confirming, the MCE 4 may determine whether or not the eNB #1-m performing the MBSFN transmission is added (process H13 in Fig. 23) .

The MCE 4 may transmit the MBSFN transmission request to the eNB #1-m (process H14 in Fig. 23).

The MCE 4 may select the frequency to be used for the MBSFN transmission on the basis of the result of the frequency availability confirming (process H15 in Fig. 23).

The MCE 4 may perform scheduling of the MBSFN transmission (process H16 in Fig. 23).

On the basis of the result of the scheduling performed, the MCE 4 may transmit the MBSFN control information (that is, at least one of the "transmission timing," the "using frequency," the "modulation scheme," and the "coding rate") to the eNBs #1-1 and #1-m (processes H17 in Fig. 23).

The MBMS GW 8 may transmit the MBMS data (that is, the "content data") to the eNBs #1-1 and #1-m (process H18 in Fig. 23).

The eNB #1-1 and 1-m may perform the MBSFN transmission of the received MBMS data to the wireless terminal 2 (process H19 in Fig. 23). Then, the process may end.

[D] Others

The technology of the disclosure is not limited to the above-described embodiments, and various modifications can be made without departing from the gist of the present embodiment. The components and the processes of the present embodiment can be selected as appropriate or may be combined appropriately.

REFERENCE NUMERALS LIST

100    wireless communication system

| | |
|---|---|
| 1 | eNB |
| 1a | eNB |
| 10 | antenna |
| 10a | LSI |
| 10b | DSP |
| 11b | I/F |
| 11 | transmitter |
| 111 | pilot generating unit |
| 112 | MBSFN control information generating unit |
| 113 | encoding/modulating unit |
| 114 | transmission multiple access processing unit |
| 115 | transmission wireless unit |
| 12 | controller |
| 121 | system information management/storage unit |
| 122 | radio link controller |
| 1221 | scheduler |
| 1222 | communication duration time controller |
| 1223 | using frequency controller |
| 13 | receiver |
| 131 | reception wireless unit |
| 132 | reception multiple access processing unit |
| 133 | demodulating/decoding unit |
| 134 | wireless measuring unit |
| 14 | memory |
| 2 | wireless terminal |
| 20 | antenna |
| 20a | LSI |
| 20b | DSP |
| 21 | receiver |
| 211 | reception wireless unit |
| 212 | reception orthogonal multiple access processing unit |
| 213 | demodulating/decoding unit |
| 214 | system information extracting unit |
| 215 | control signal extracting unit |
| 216 | pilot extracting unit |
| 217 | pilot generating unit |
| 218 | synchronizing unit |
| 22 | controller |
| 221 | terminal setting controller |
| 222 | system information storage unit |
| 223 | radio link controller |
| 23 | transmitter |
| 231 | transmission wireless unit |
| 232 | transmission orthogonal multiple access processing unit |
| 233 | encoding/modulating unit |
| 24 | memory |
| 25 | display unit |
| 26 | microphone |
| 27 | amplifying unit |
| 3 | MME |
| 4 | MCE |
| 41 | session controller |
| 42 | scheduler |
| 43 | content controller |
| 44 | frequency selector |
| 5 | BMSC |
| 6 | MBMS GW |
| 61 | MBMS CP |

21

| 62 | MBMS UP |
| 7 | content provider |
| 8 | PDN gateway |

**Claims**

1. A wireless communication system comprising:

   a wireless terminal (2),
   a plurality of base stations (1) that communicate with the wireless terminal (2) using at least one of a plurality of frequencies; and
   a control device (4) that controls the plurality of base stations (1),
   wherein each of the plurality of base stations (1) includes a transmitter (11) configured to transmit information related to availability for at least one frequency among the plurality of frequencies shared by the plurality of base stations (1) to the control device (4), and
   the control device (4) includes:

   a receiver (42, 44) configured to receive the information related to the availability, and
   a controller (42, 44) configured to control a frequency used for transmission of the same data by the plurality of base stations (1).

2. The wireless communication system (100) according to claim 1, wherein the controller (42, 44) is configured to transmit control information related to the frequency used for the transmission of the same data to the plurality of base stations.

3. The wireless communication system (100) according to claim 2, wherein the control information includes information related to at least one of a modulation scheme, a coding rate, and a transmission timing used for the transmission of the same data by the plurality of base stations (1).

4. The wireless communication system (100) according to any one of claims 1 to 3, wherein the plurality of frequencies are frequencies that can be used without license.

5. A control device (4) that controls a plurality of base stations (1) communicating with a wireless terminal (2) using at least one of a plurality of frequencies, the control device (4) comprising:

   a receiver (42, 44) configured to receive information related to availability for at least one frequency among the plurality of frequencies shared by the plurality of base stations (1) from each of the plurality of base stations (1); and
   a controller (42, 44) configured to control a frequency used for transmission of the same data by the plurality of base stations (1).

6. The control device (4) according to claim 5, wherein the controller (42, 44) is configured to transmit control information related to the frequency used for the transmission of the same data to the plurality of base stations (1).

7. The control device (4) according to claim 6, wherein the control information includes information related to at least one of a modulation scheme, a coding rate, and a transmission timing used for the transmission of the same data by the plurality of base stations (1).

8. The control device (4) according to any one of claims 5 to 7, wherein the plurality of frequencies are frequencies that can be used without license.

9. A base station (1) that is one of a plurality of base stations (1) communicating with a wireless terminal (2) using at least one of a plurality of frequencies, the base station (1) comprising:

   a first transmitter (11) configured to transmit information related to availability for at least one frequency among the plurality of frequencies shared by the plurality of base stations (1) to the control device (4); and
   a second transmitter (11) configured to transmit the same data to the wireless terminal (2) using at least one frequency among the plurality of frequencies.

10. The base station (1) according to claim 9, further comprising, a receiver (13) configured to receive control information related to the frequency used for the transmission of the same data from the control device (4).

11. The base station (1) according to claim 10, wherein the control information includes information related to at least one of a modulation scheme, a coding rate, and a transmission timing used for the transmission of the same data.

12. The base station (1) according to any one of claims 9 to 11, wherein the plurality of frequencies are frequencies that can be used without license.

13. A wireless terminal (2) that communicates with a plurality of base stations (1) using at least one of a plurality of frequencies, the wireless terminal (2) comprising:

a first receiver (21) configured to receive control information indicating at least one frequency selected from the plurality of frequencies shared by the plurality of base stations (1) from at least one of the plurality of base stations (1); and
a second receiver (21) configured to receive the same data transmitted to the wireless terminal (2) by the plurality of base stations (1) using a frequency indicated by the received control information.

14. The wireless terminal (2) according to claim 13, wherein the first receiver (21) is configured to receive control information including information related to at least one of a demodulation scheme, a coding rate, and a transmission timing used for reception of the same data.

15. The wireless terminal (2) according to claim 13 or 14, wherein the plurality of frequencies are frequencies that can be used without license.

**Patentansprüche**

1. Drahtloskommunikationssystem umfassend:

ein drahtloses Endgerät (2),
mehrere Basisstationen (1), die mit dem drahtlosen Endgerät (2) unter Verwendung mindestens einer von mehreren Frequenzen kommunizieren; und
eine Steuervorrichtung (4), die die mehreren Basisstationen (1) steuert,
wobei jede der mehreren Basisstationen (1) einen Sender (11) aufweist, der konfiguriert ist, um Informationen bezüglich der Verfügbarkeit für mindestens eine Frequenz unter den mehreren Frequenzen, die von den mehreren Basisstationen (1) geteilt werden, zu der Steuervorrichtung (4) zu senden, und
wobei die Steuervorrichtung (4) Folgendes aufweist:

einen Empfänger (42, 44), der konfiguriert ist, um die Informationen bezüglich der Verfügbarkeit zu empfangen, und
eine Steuerung (42, 44), die konfiguriert ist, um eine Frequenz zu steuern, die zum Senden derselben Daten durch die mehreren Basisstationen (1) verwendet wird.

2. Drahtloskommunikationssystem (100) nach Anspruch 1, wobei die Steuerung (42, 44) konfiguriert ist, um Steuerinformationen bezüglich der Frequenz, die zum Senden derselben Daten zu den mehreren Basisstationen verwendet wird, zu senden.

3. Drahtloskommunikationssystem (100) nach Anspruch 2, wobei die Steuerinformationen Informationen bezüglich mindestens eines(r) eines Modulationsschemas, einer Codierrate und einer Sendezeit, die zum Senden derselben Daten durch die mehreren Basisstationen (1) verwendet werden, umfassen.

4. Drahtloskommunikationssystem (100) nach einem der Ansprüche 1 bis 3, wobei die mehreren Frequenzen Frequenzen sind, die ohne Genehmigung verwendet werden können.

5. Steuervorrichtung (4), die mehrere Basisstationen (1) steuert, die mit einem drahtlosen Endgerät (2) unter Verwendung mindestens einer von mehreren Frequenzen kommunizieren, wobei die Steuervorrichtung (4) Folgendes umfasst:

einen Empfänger (42, 44), der konfiguriert ist, um Informationen bezüglich der Verfügbarkeit für mindestens eine Frequenz unter den mehreren Frequenzen, die von den mehreren Basisstationen (1) geteilt werden, von jeder der mehreren Basisstationen (1) zu empfangen; und
eine Steuerung (42, 44), die konfiguriert ist, um eine Frequenz zu steuern, die zum Senden derselben Daten durch die mehreren Basisstationen (1) verwendet wird.

6. Steuervorrichtung (4) nach Anspruch 5, wobei die Steuerung (42, 44) konfiguriert ist, um Steuerinformationen bezüglich der Frequenz, die zum Senden derselben Daten zu den mehreren Basisstationen (1) verwendet wird, zu senden.

7. Steuervorrichtung (4) nach Anspruch 6, wobei die Steuerinformationen Informationen bezüglich mindestens eines/einer eines Modulationsschemas, einer Codierrate und einer Sendezeit, die zum Senden derselben Daten durch die mehreren Basisstationen (1) verwendet werden, umfassen.

8. Steuervorrichtung (4) nach einem der Ansprüche 5 bis 7, wobei die mehreren Frequenzen Frequenzen sind, die ohne Genehmigung verwendet werden können.

9. Basisstation (1), die eine von mehreren Basisstationen (1) ist, die mit einem drahtlosen Endgerät (2) unter Verwendung mindestens einer von mehreren Frequenzen kommunizieren, wobei die Basisstation (1) Folgendes umfasst:

einen ersten Sender (11), der konfiguriert ist, um Informationen bezüglich der Verfügbarkeit für mindestens eine Frequenz unter den mehreren Frequenzen, die von den mehreren Basisstationen (1) geteilt werden, zu der Steuervorrichtung (4) zu senden; und
einen zweiten Sender (11), der konfiguriert ist, um dieselben Daten zu dem drahtlosen Endgerät (2) unter Verwendung mindestens einer Frequenz unter den mehreren Frequenzen zu senden.

10. Basisstation (1) nach Anspruch 9, ferner umfassend einen Empfänger (13), der konfiguriert ist, um Steuerinformationen bezüglich der Frequenz, die zum Senden derselben Daten von der Steuervorrichtung (4) verwendet wird, zu empfangen.

11. Basisstation (1) nach Anspruch 10, wobei die Steuerinformationen Informationen bezüglich mindestens eines/einer eines Modulationsschemas, einer Codierrate und einer Sendezeit, die zum Senden derselben Daten verwendet werden, umfassen.

12. Basisstation (1) nach einem der Ansprüche 9 bis 11, wobei die mehreren Frequenzen Frequenzen sind, die ohne Genehmigung verwendet werden können.

13. Drahtloses Endgerät (2), das mit mehreren Basisstationen (1) unter Verwendung mindestens einer von mehreren Frequenzen kommuniziert, wobei das drahtlose Endgerät (2) Folgendes umfasst:

einen ersten Empfänger (21), der konfiguriert ist, um Steuerinformationen, die mindestens eine Frequenz angeben, die aus den mehreren Frequenzen ausgewählt ist, die von den mehreren Basisstationen (1) geteilt werden, von mindestens einer der mehreren Basisstationen (1) zu empfangen; und
einen zweiten Empfänger (21), der konfiguriert ist, um dieselben Daten, die durch die mehreren Basisstationen (1) unter Verwendung einer Frequenz, die durch die empfangenen Steuerinformationen angegeben wird, zu dem drahtlosen Endgerät (2) gesendet werden, zu empfangen.

14. Drahtloses Endgerät (2) nach Anspruch 13, wobei der erste Empfänger (21) konfiguriert ist, um Steuerinformationen einschließlich Informationen bezüglich mindestens eines/einer eines Demodulationsschemas, einer Codierrate und einer Sendezeit, die zum Empfang derselben Daten verwendet werden, zu empfangen.

15. Drahtloses Endgerät (2) nach Anspruch 13 oder 14,
wobei die mehreren Frequenzen Frequenzen sind, die ohne Genehmigung verwendet werden können.

**Revendications**

1.  Système de communication sans fil comprenant :

    un terminal sans fil (2),
    une pluralité de stations de base (1) qui communiquent avec le terminal sans fil (2) en utilisant au moins l'une d'une pluralité de fréquences ; et
    un dispositif de commande (4) qui commande la pluralité de stations de base (1),
    dans lequel chacune de la pluralité de stations de base (1) comprend un émetteur (11) configuré pour transmettre des informations relatives à la disponibilité pour au moins une fréquence parmi la pluralité de fréquences partagées par la pluralité de stations de base (1) au dispositif de commande (4), et
    le dispositif de commande (4) comprend :

    un récepteur (42, 44) configuré pour recevoir les informations relatives à la disponibilité, et
    une commande (42, 44) configurée pour commander une fréquence utilisée pour la transmission des mêmes données par la pluralité de stations de base (1).

2.  Système de communication sans fil (100) selon la revendication 1, dans lequel la commande (42, 44) est configurée pour transmettre des informations de commande relatives à la fréquence utilisée pour la transmission des mêmes données à la pluralité de stations de base.

3.  Système de communication sans fil (100) selon la revendication 2, dans lequel les informations de commande comprennent des informations relatives à au moins un parmi un schéma de modulation, un taux de codage et une synchronisation de transmission utilisés pour la transmission des mêmes données par la pluralité de stations de base (1).

4.  Système de communication sans fil (100) selon l'une quelconque des revendications 1 à 3, dans lequel la pluralité de fréquences sont des fréquences qui peuvent être utilisées sans licence.

5.  Dispositif de commande (4) qui commande une pluralité de stations de base (1) communiquant avec un terminal sans fil (2) en utilisant au moins l'une d'une pluralité de fréquences, le dispositif de commande (4) comprenant :

    un récepteur (42, 44) configuré pour recevoir des informations relatives à la disponibilité d'au moins une fréquence parmi la pluralité de fréquences partagées par la pluralité de stations de base (1) de chacune de la pluralité de stations de base (1) ; et
    une commande (42, 44) configurée pour commander une fréquence utilisée pour la transmission des mêmes données par la pluralité de stations de base (1).

6.  Dispositif de commande (4) selon la revendication 5, dans lequel la commande (42, 44) est configurée pour transmettre des informations de commande relatives à la fréquence utilisée pour la transmission des mêmes données à la pluralité de stations de base (1).

7.  Dispositif de commande (4) selon la revendication 6, dans lequel les informations de commande comprennent des informations relatives à au moins un parmi un schéma de modulation, un taux de codage et une synchronisation de transmission utilisés pour la transmission des mêmes données par la pluralité de stations de base (1).

8.  Dispositif de commande (4) selon l'une quelconque des revendications 5 à 7, dans lequel la pluralité de fréquences sont des fréquences qui peuvent être utilisées sans licence.

9.  Station de base (1) qui est l'une d'une pluralité de stations de base (1) communiquant avec un terminal sans fil (2) en utilisant au moins l'une d'une pluralité de fréquences, la station de base (1) comprenant :

    un premier émetteur (11) configuré pour transmettre des informations relatives à la disponibilité d'au moins une fréquence parmi la pluralité de fréquences partagées par la pluralité de stations de base (1) au dispositif de commande (4) ; et
    un second émetteur (11) configuré pour transmettre les mêmes données au terminal sans fil (2) en utilisant au moins une fréquence parmi la pluralité de fréquences.

**10.** Station de base (1) selon la revendication 9, comprenant en outre un récepteur (13) configuré pour recevoir des informations de commande relatives à la fréquence utilisée pour la transmission des mêmes données depuis le dispositif de commande (4).

**11.** Station de base (1) selon la revendication 10, dans laquelle les informations de commande comprennent des informations relatives à au moins un parmi un schéma de modulation, un taux de codage et une synchronisation de transmission utilisés pour la transmission des mêmes données.

**12.** Station de base (1) selon l'une quelconque des revendications 9 à 11, dans laquelle la pluralité de fréquences sont des fréquences qui peuvent être utilisées sans licence.

**13.** Terminal sans fil (2) qui communique avec une pluralité de stations de base (1) en utilisant au moins l'une d'une pluralité de fréquences, le terminal sans fil (2) comprenant :

un premier récepteur (21) configuré pour recevoir des informations de commande indiquant au moins une fréquence sélectionnée parmi la pluralité de fréquences partagées par la pluralité de stations de base (1) à partir d'au moins une de la pluralité de stations de base (1) ; et
un second récepteur (21) configuré pour recevoir les mêmes données transmises au terminal sans fil (2) par la pluralité de stations de base (1) en utilisant une fréquence indiquée par les informations de commande reçues.

**14.** Terminal sans fil (2) selon la revendication 13, dans lequel le premier récepteur (21) est configuré pour recevoir des informations de commande comprenant des informations relatives à au moins un parmi un schéma de démodulation, un taux de codage et une synchronisation de transmission utilisés pour la réception des mêmes données.

**15.** Terminal sans fil (2) selon la revendication 13 ou 14, dans lequel la pluralité de fréquences sont des fréquences qui peuvent être utilisées sans licence.

# FIG. 1

FIG. 2

## FIG. 3

```
                                    ┌─ 4
┌─────────────────────────────────────┐
│              MCE                    │
│   ┌─────────────────┐               │
│   │    SESSION       │── 41         │
│   │   CONTROLLER     │              │
│   └─────────────────┘               │
│                                     │
│   ┌─────────────────┐               │
│   │    SCHEDULER     │── 42         │
│   └─────────────────┘               │
│                                     │
│   ┌─────────────────┐               │
│   │    CONTENT       │── 43         │
│   │   CONTROLLER     │              │
│   └─────────────────┘               │
│                                     │
│   ┌─────────────────┐               │
│   │   FREQUENCY      │── 44         │
│   │   SELECTER       │              │
│   └─────────────────┘               │
└─────────────────────────────────────┘
```

From/ To MME
SESSION CONTROL
INFORMATION, CONTENT
CONTROL INFORMATION,
AND THE LIKE

From/ To eNB
SESSION CONTROL INFORMATION,
MBSFN CONTROL INFORMATION,
AND THE LIKE
FREQUENCY AVAILABILITY
CONIFIRMING REQUEST,
FREQUENCY AVAILABILITY
INFORMATION,
AND THE LIKE

FIG. 4

# FIG. 5

~122

RADIO LINK CONTROL UNIT

SCHEDULER ~1221

COMMUNICATION DURATION TIME CONTROL UNIT ~1222

USING FREQUENCY CONTROL UNIT ~1223

FIG. 6

FIG. 7

| | f1 | f2 | f3 | f4 | f5 |
|-------|----|----|----|----|----|
| eNB#1 | × | ◯ | ◯ | × | ◯ |
| eNB#2 | ◯ | ◯ | ◯ | × | ◯ |
| eNB#3 | × | ◯ | × | ◯ | ◯ |

←FREQUENCIES OF UNLICENSED BAND

A1          A2

# FIG. 8

| | f1 | f2 | f3 | f4 | f5 | f6 |
|---|---|---|---|---|---|---|
| eNB#1 | ○ | × | ○ | × | ○ | × |
| eNB#2 | ○ | ○ | ○ | ○ | × | ○ |
| eNB#3 | ○ | × | ○ | ○ | ○ | ○ |
| eNB#4 | × | ○ | ○ | ○ | × | ○ |
| eNB#5 | × | ○ | ○ | × | ○ | ○ |

←FREQUENCIES OF UNLICENSED BAND

B1   B2   B3

## FIG. 9

## FIG. 10

# FIG. 11

```
                    ┌─────────────┐
                    │    START    │
                    └──────┬──────┘
                           │
                           ▼
        ┌──────────────────────────────────┐
   E1 ──│  RECEIVE FREQUENCY               │
        │       INFORMATION                │
        └──────────────────┬───────────────┘
                           │
                           ▼
        ┌──────────────────────────────────┐
   E2 ──│  ACQUIRE RECEPTION POWER         │
        │     THRESHOLD RPth               │
        └──────────────────┬───────────────┘
                           │
                           ▼
        ┌──────────────────────────────────┐
   E3 ──│         SET FREQUENCY            │
        └──────────────────┬───────────────┘
                           │
                           ▼
        ┌──────────────────────────────────┐
   E4 ──│  MEASURE RECEPTION               │
        │       POWER RP                   │
        └──────────────────┬───────────────┘
                           │
                           ▼
              ◇ RP>RPth? ◇──── Yes (NON-AVAILABLE)
   E5 ──                │
                        │ No (AVAILABLE)
                        ▼
        ┌──────────────────────────────────┐
   E6 ──│  NOTIFY OF AVAILABILITY INFORMATION│
        └──────────────────┬───────────────┘
                           │
                           ▼
            ◇ ARE PLURALITY             ◇──── No
   E7 ──    ◇ OF FREQUENCIES            ◇
            ◇ AVAILABLE?                ◇
                        │
                        │ Yes
                        ▼
                    ┌─────────────┐
                    │     END     │
                    └─────────────┘
```

# FIG. 12

```
            ┌─────────┐
            │  START  │
            └────┬────┘
                 ▼
F1 ─┐  ┌──────────────────────┐
    └──│  RECEIVE FREQUENCY    │
       │     INFORMATION       │
       └──────────┬───────────┘
                  ▼◄────────────────────┐
F2 ─┐  ┌──────────────────────┐         │
    └──│     SET FREQUENCY     │         │
       └──────────┬───────────┘         │
                  ▼                      │
F3 ─┐  ┌──────────────────────┐         │
    └──│  MEASURE RECEPTION    │         │
       │      POWER RP         │         │
       └──────────┬───────────┘         │
                  ▼                      │
F4 ─┐  ┌──────────────────────┐         │
    └──│  NOTIFY OF RECEPTION  │         │
       │      POWER RP         │         │
       └──────────┬───────────┘         │
                  ▼                      │
F5 ─┐      ╱─────────────╲          No  │
    └──── ╱  ARE PLURALITY ╲ ───────────┘
          ╲ OF FREQUENCIES ╱
           ╲  AVAILABLE?  ╱
             ╲──────┬───╱
                 Yes│
                    ▼
            ┌─────────┐
            │   END   │
            └─────────┘
```

FIG. 13

FIG. 14

## FIG. 15

FIG. 16

# FIG. 17

$l = 0$        $l = 5$   $l = 0$        $l=5$

EVEN–NUMBERED SLOTS     ODD–NUMBERED SLOTS

# FIG. 18

$l = 0$          $l = 6 l = 0$          $l=6$

FIG. 19

## FIG. 20

FIG. 21

## FIG. 22

UE  ADDITIONAL eNB#1-m  eNB#1-1  eNB#2-1  MCE  MME  MBMS GW

SESSION START
H1

MBSFN CONTROL INFORMATION
(MBSFN ID, MBSFN CELL ID,
AND THE LIKE)
H2

SCHEDULING
H3

MBSFN CONTROL INFORMATION
(TRANSMISSION TIMING,
USING FREQUENCY, AND THE LIKE)
H4

H5

MBMS DATA
(CONTENT
DATA)
H6

H7

MBSFN CONTROL INFORMATION
(MBSFN ID, MBSFN CELL ID,
AND THE LIKE)
H8

SYNCHRONIZATION
SIGNAL AND PILOT
H9

H10

RADIO LINK QUALITY
MEASUREMENT

RADIO LINK QUALITY
MEASUREMENT RESULT
H11

H12

AVAILABILITY
CONFIRMING

## FIG. 23

UE    ADDITIONAL eNB#1-m    eNB#1-1    eNB#2-1    MCE    MME    MBMS GW

DETERMINATION OF WHETHER MBSFN TRANSMISSION eNB IS ADDED

H13

MBSFN TRANSMISSION REQUEST

H14

H15

USING FREQUENCY SELECTION

SCHEDULING

H16

MBSFN CONTROL INFORMATION (TRANSMISSION TIMING, USING FREQUENCY, AND THE LIKE)

MBMS DATA (CONTENT DATA)

H17

H18

H19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006094005 A
- JP 2014500685 A
- JP 2009538025 A
- EP 1768292 A1
- EP 2237637 A1

**Non-patent literature cited in the description**

- LTE; Evolved Universal Terrestrial Radio Access (E-UTRA); Physical channels and modulation (3GPP TS 36.211 version 10.7.0 Release 10). *ETSI,* April 2013
- 3rd Generation Partnership Project; Technical Specification Group Radio Access Network; Evolved Universal Terrestrial Radio Access (E-UTRA); Physical Channels and Modulation (3GPP TS 36.211 version 9.1.0 Release 9). *ETSI,* March 2010